# EUROPEAN PATENT SPECIFICATION

(11) **EP 3 806 427 B1**
(45) Date of publication and mention of the grant of the patent: **03.07.2024**
(21) Application number: 20196226.3
(22) Date of filing: 15.09.2020
(51) Int. Cl.: H04L 67/306

(54) **INFORMATION PROCESSING APPARATUS, INFORMATION PROCESSING SYSTEM, AND INFORMATION PROCESSING METHOD**
INFORMATIONSVERARBEITUNGSVORRICHTUNG, INFORMATIONSVERARBEITUNGSSYSTEM UND INFORMATIONSVERARBEITUNGSVERFAHREN
APPAREIL DE TRAITEMENT D'INFORMATIONS, SYSTÈME DE TRAITEMENT D'INFORMATIONS ET PROCÉDÉ DE TRAITEMENT D'INFORMATIONS

(30) Priority: 10.10.2019 JP 2019187112
(43) Date of publication of application: 14.04.2021
(73) Proprietor: Ricoh Company, Ltd., Tokyo 143-8555 (JP)
(72) Inventor: Nishida, Takayori, Ohta-ku, Tokyo 143-8555 (JP)
(74) Representative: Marks & Clerk LLP

(56) References cited:
- US-A- 5 742 673
- US-A1- 2007 099 599
- US-A1- 2017 163 743

## Description

### Technical Field

This disclosure relates to an information processing apparatus, an information processing system, and an information processing method.

### Background Art

Conventionally, when users use service providing systems for providing a plurality of services, the users log in the service providing systems using login information including organization identification (ID), and then the users can use services available for use by subscribing contracts associated with the organization ID as disclosed in JP-2018-092670-A.

In conventional technologies, services available for use by subscribing contracts can be presented to the users. However, coordination of services may not be controlled appropriately for each one of the users. For example, if two services that can be mutually coordinated with each other are providable, and one user may subscribe a contract of using only one service and another user may subscribe a contract of using both services, the coordination of services may not be controlled appropriately for different users subscribing different contracts.

US5742673 discloses a generic service coordination mechanism that solves feasible service interaction problems taking into account real-time processing constraints within telecommunication networks.

### SUMMARY

As one aspect of the present disclosure, an information processing apparatus is devised. The information processing apparatus includes a coordination service identification unit configured to, responsive to a first service that can be used by a user being enabled, identify a second service that is able to be coordinated with the first service based on definition information defining coordination relationships settable between a plurality of services; and characterized by a service notification unit configured to, responsive to the coordination service identification unit identifying the second service, notify to the first or second service serving as a coordinating service, information on, respectively, the second or first service serving as a coordinated service.

As another aspect of the present disclosure, a method of processing information is devised. The method includes identifying, responsive to a first service that can be used by a user being enabled, a second service that is able to be coordinated with the first service based on definition information defining coordination relationship settable between a plurality of services; and characterized by responsive to the identification of the second service, notifying to the first or second service serving as a coordinating service, information on, respectively, the second or first service serving as a coordinated service.

As to the above described aspects of the present disclosure, when the number of services that is available for use for users is changed, such as increased or decreased, in response to subscribing contract or cancelling contract, the coordination of services reflecting the service contracts can be controlled.

### BRIEF DESCRIPTION OF THE DRAWINGS

A more complete appreciation of the description and many of the attendant advantages and features thereof can be readily acquired and understood from the following detailed description with reference to the accompanying drawings, wherein:
FIG. 1 is an example of configuration of an integrated service providing system according to an embodiment of this disclosure;
FIG. 2 is an example of configuration of an information processing system according to an embodiment of this disclosure;
FIG. 3 is an example of configuration of hardware block diagram of an electronic information board;
FIG. 4 is an example of configuration of hardware block diagram of MFP;
FIG. 5 is an example of configuration of hardware block diagram of a management server;
FIG. 6 is an example of configuration of hardware block diagram of an administration terminal;
FIG. 9 is an example of coordination definition information according to an embodiment of this disclosure;
FIG. 10 is an example of coordinated use information DB according to an embodiment of this disclosure;
FIG. 11 is a flowchart illustrating processing of subscribing a new contract performed by a management server according to an embodiment of this disclosure;
FIG. 12 is a flowchart illustrating a processing of adding contract performed by a management server according to an embodiment of this disclosure;
FIG. 13 is a flowchart illustrating a processing of contract cancellation performed by a management server according to an embodiment of this disclosure;
FIG. 14 is an example of a display screen used for subscribing a contract of adding a service, which is displayed on an administration terminal according to an embodiment of this disclosure;
FIG. 15 is an example of a display screen used for subscribing a contract of adding a service, which is displayed on an administration terminal after displaying the display screen of FIG. 14, according to an embodiment of this disclosure;
FIG. 16 is an example of a display screen used for subscribing a contract of adding a service, which is displayed on an administration terminal after displaying the display screen of FIG. 15, according to an embodiment of this disclosure;
FIG. 17 is an example of a display screen used for canceling a contract of service, which is displayed on an administration terminal according to an embodiment of this disclosure;
FIG. 18 is an example of a display screen used for canceling a contract of service, which is displayed on an administration terminal after displaying the display screen of FIG. 17, according to an embodiment of this disclosure;
FIG. 19 is an example of a display screen used for canceling a contract of service, which is displayed on an administration terminal after displaying the display screen of FIG. 18, according to an embodiment of this disclosure;
FIG. 20 is an example of a display screen used for canceling a contract of service, which is displayed on an administration terminal after displaying the display screen of FIG. 19, according to an embodiment of this disclosure;
FIG. 21 is a diagram illustrating a first example of coordination function of a service provided to a subscriber;
FIG. 22 is a diagram illustrating a first example of coordination function of a service provided to a subscriber;
FIG. 23 is a diagram illustrating a second example of coordination function of a service provided to a subscriber;
FIG. 24 is a diagram illustrating a second example of coordination function of a service provided to a subscriber; and
FIG. 25 is a sequence diagram illustrating a procedure of user authentication processing by an information processing system according to an embodiment of this disclosure.

The accompanying drawings are intended to depict embodiments of the this disclosure and should not be interpreted to limit the scope thereof. The accompanying drawings are not to be considered as drawn to scale unless explicitly noted.

### DETAILED DESCRIPTION

A description is now given of exemplary embodiments of the present inventions. It should be noted that although such terms as first, second, etc. may be used herein to describe various elements, components, regions, layers and/or units, it should be understood that such elements, components, regions, layers and/or units are not limited thereby because such terms are relative, that is, used only to distinguish one element, component, region, layer or unit from another region, layer or unit. Thus, for example, a first element, component, region, layer or unit discussed below could be termed a second element, component, region, layer or unit without departing from the teachings of the present inventions.

Further, it should be noted that the terminology used herein is for the purpose of describing particular embodiments only and is not intended to be limiting of the present inventions. Thus, for example, as used herein, the singular forms "a", "an" and "the" are intended to include the plural forms as well, unless the context clearly indicates otherwise. Moreover, the terms "includes" and/or "including," when used in this specification, specify the presence of stated features, integers, steps, operations, elements, and/or components, but do not preclude the presence or addition of one or more other features, integers, steps, operations, elements, components, and/or groups thereof.

Hereinafter, a description is given of an embodiment with reference to the accompanying drawings.

### (Integrated Service Providing System)

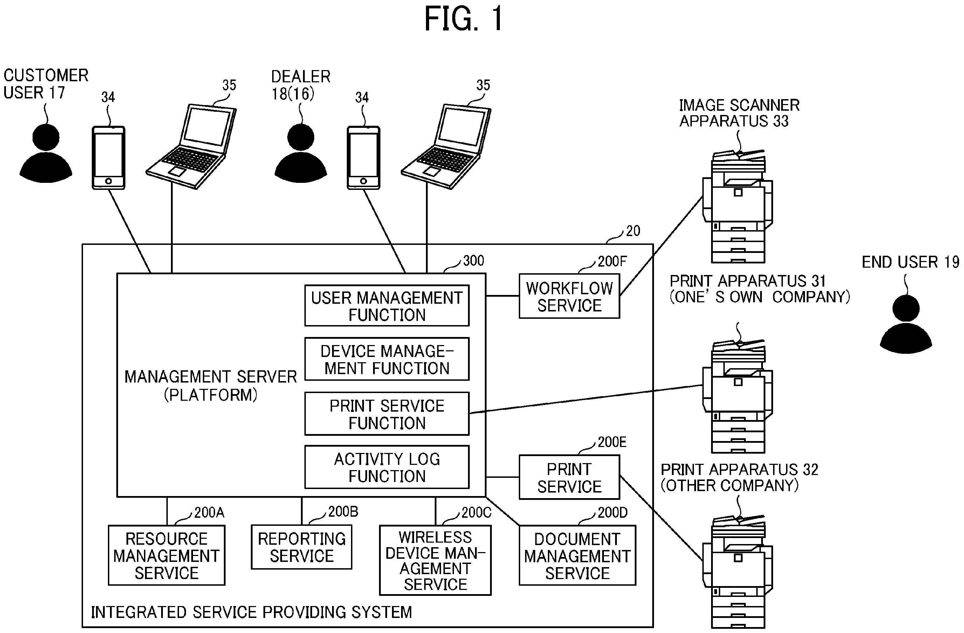

Hereinafter, with reference to FIG. 1, a description is given of an outline of an integrated service providing system 20 according to the embodiment of this disclosure. FIG. 1 is an example of configuration of the integrated service providing system 20 according to the embodiment of this disclosure.

The integrated service providing system 20 (FIG. 1) enables an integrated management of resources related to organizations, such as offices (e.g., users, devices, documents, conference rooms) using a plurality of services 200.

As illustrated in FIG. 1, the integrated service providing system 20 includes a plurality of services 200, such as resource management service 200A, reporting service 200B, wireless device management service 200C, document management service 200D, print service 200E, and workflow service 200F.

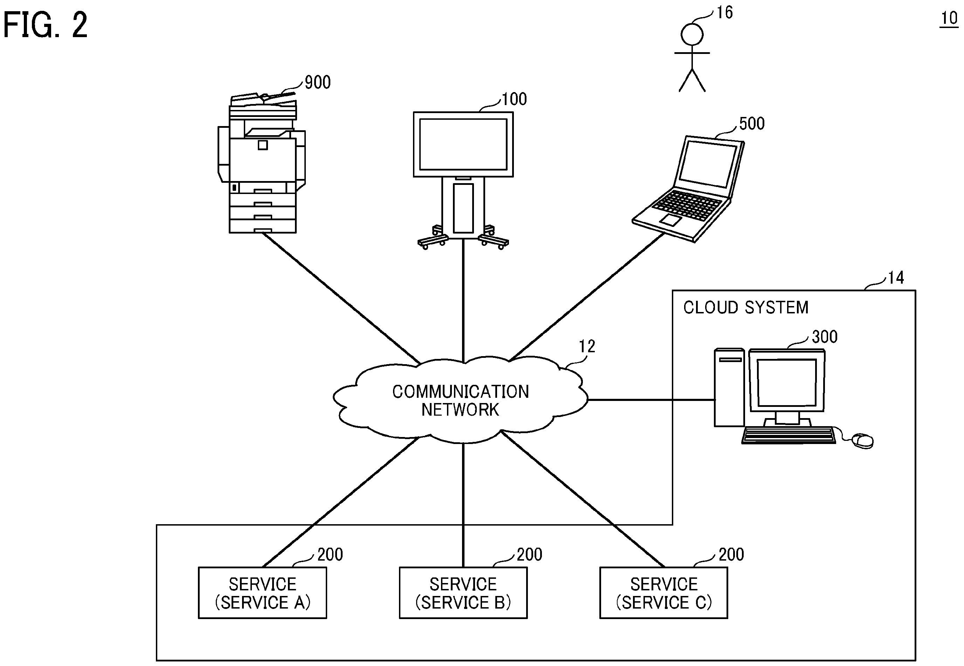

Further, the integrated service providing system 20 includes, for example, a management server 300. As to be described later with reference to FIG. 2 and others, the management server 300 functions as a platform for managing the plurality of services 200A to 200F. For example, as illustrated in FIG. 1, the management server 300 includes user management function, device management function, print service function, activity log function, or the like.

For example, the print service is a function of providing print function using an printing operation by a print apparatus 31 (e.g., multi-functional peripherals (MFP), printer) provided by one company (one's own company or first company) managed by the management server 300 to an end user 19 (an example of "user").

For example, the activity log function is a function of obtaining or acquiring log data of the number of printed sheets and the number of scanned sheets, and log data of the number of contracts of a dealer 18 (distributor).

A customer user 17 and the dealer 18 can use management functions, which is permitted or allowed to use for the customer user 17 and the dealer 18 among the plurality of management functions provided by the management server 300, by accessing the management server 300 using a terminal apparatus, such as a smartphone 34 and a personal computer (PC) 35 illustrated in FIG. 1.

The resource management service 200A provides a resource management function that manages office resources, such as electronic information boards, conference rooms, or the like. For example, the end user 19 can perform a reservation management of conference rooms by utilizing the resource management service 200A.

The reporting service 200B provides a function of creating and outputting a report.

The wireless device management service 200C provides a wireless device management function for managing various wireless devices.

The document management service 200D provides a document management function for managing a plurality of documents to the end user 19.

The print service 200E provides a print function using a printing operation performed by a print apparatus 32 (e.g., MFP, printer) provided by other company (second company different from first company) to the end user 19.

The workflow service 200F provides a function of creating and executing a workflow to the end user 19. For example, one workflow provided by the workflow service 200F can recognize characters by performing optical character reading (OCR) processing on an image, generated by using a scanning function of an image scanner apparatus 33 (e.g., MFP), and then save a recognition result in a given folder. Further, for example, another workflow provided by the workflow service 200F enables review and approval processing of in-house documents.

As to the services 200A to 200F, some of the services 200A to 200F have functions that can be coordinated with other service 200 (e.g., coordination function of print service 200E and the workflow service 200F).

Further, as to the plurality of services 200A to 200F, the end user 19 can use a particular service 200 that is required for the end user 19 alone by subscribing a contract of the particular service 200 required for the end user 19. Therefore, as to be described later with reference to FIG. 2 and others, the management server 300 has a function of enabling and disabling coordination function of each one of the services 200 depending on the contract status of each of the services 200 set for the end user 19 (hereinafter referred to as "enabling-disabling function").

Hereinafter, with reference to FIG. 1, a description is given of application examples 1 to 8 of the enabling-disabling function providable by the integrated service providing system 20.

### (Application Example 1)

The enabling-disabling function is applied to a coordination of the resource management service 200A and the reporting service 200B. For example, an utilization state of conference room managed by the resource management service 200A (e.g., rate of utilization, the number of persons using conference room) may be output as a report. In this case, each conference room managed by the resource management service 200A is displayed (enabled) or not displayed (disenabled) on a setting screen of the reporting service 200B based on presence or absence of contract subscribed for the resource management service 200A, in which the conference room is an option of acquisition target of report output target data (one example of "graphical user interface (GUI)").

### (Application Example 2)

The enabling-disabling function is applied to a coordination of the wireless device management service 200C and the reporting service 200B. For example, the state of accessing load at a particular wireless local area network (LAN) device may be output as a report. In this case, each wireless device managed by the wireless device management service 200C is displayed (enabled) or not displayed (disenabled) on a setting screen of the reporting service 200B based on presence or absence of contract subscribed for the wireless device management service 200C, in which the wireless device is an option of acquisition target of report output target data (one example of "GUI").

### (Application Example 3)

The enabling-disabling function is applied to a coordination of the document management service 200D and the print service 200E. For example, in a case of periodically printing documents managed by the document management service 200D, a print request may be transmitted from the document management service 200D to the print service 200E periodically. In this case, the print service 200E is displayed (enabled) or not displayed (disenabled) on a setting screen of the document management service 200D based on presence or absence of contract subscribed for the print service 200E, in which the print service is an option of output destination of print request (one example of "GUI").

### (Application Example 4)

The enabling-disabling function is applied to a coordination of the print service 200E and the reporting service 200B. For example, the number of printed sheets managed by the print service 200E may be periodically aggregated and output as a report. In this case, the print service 200E is displayed (enabled) or not displayed (disenabled) on a setting screen of the reporting service 200B based on presence or absence of contract subscribed for the print service 200E, in which the print service is an option of acquisition target of report output target data (one example of "GUI").

### (Application Example 5)

The enabling-disabling function is applied to a coordination of the workflow service 200F and the reporting service 200B. For example, workflow-related information, such as executed times and success/failure result of workflows, managed by the workflow service 200F, may be aggregated and output as a report. In this case, the workflow service 200F is displayed (enabled) or not displayed (disenabled) on a setting screen of the reporting service 200B based on presence or absence of contract subscribed for the workflow service 200F, in which the workflow service is an option of acquisition target of report output target data (one example of "GUI").

### (Application Example 6)

The enabling-disabling function is applied a coordination of the work flow service 200F and the document management service 200D. For example, when the workflow service 200F is executed and an execution result is obtained, document, such as portable document format (PDF) and form information, may be stored in the document management service 200D. In this case, the document management service 200D is displayed (enabled) or not displayed (disenabled) on a setting screen of the workflow service 200F based on presence or absence of contract subscribed for the document management service 200D, in which the document management service is an option of storage destination of storing target data (one example of "GUI").

### (Application Example 7)

The enabling-disabling function is applied to a coordination of the resource management service 200A and the print service 200E used for performing printing. For example, by selecting a coordination button set for the print service 200E, which is displayed on the electronic information board managed by the resource management service 200A, data displayed on the electronic information board may be printed using a print apparatus available from the print service 200E. In this case, the coordination button set for the print service 200E is displayed (enabled) or not displayed (disenabled) on the electronic information board based on presence or absence of contract subscribed for the print service 200E under the control of the resource management service 200A,

### (Application Example 8)

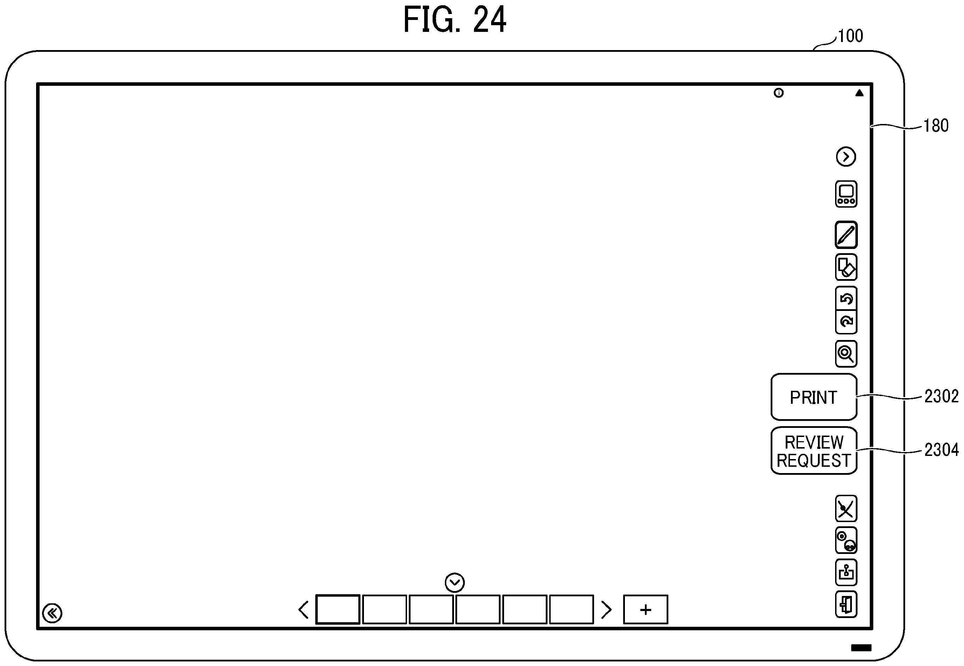

The enabling-disabling function is applied to a coordination of the resource management service 200A and the workflow service 200F. For example, by selecting a coordination button set for the workflow service 200F, which is displayed on the electronic information board managed by the resource management service 200A, data displayed on the electronic information board may be input to a workflow of the workflow service 200F, such as a workflow used for reviewing and approving. In this case, the coordination button set for the workflow service 200F (e.g., "review request" button illustrated in FIG. 24) is displayed (enabled) or not displayed (disenabled) on the electronic information board based on presence or absence of contract subscribed for the workflow service 200F under the control of the resource management service 200A.

Hereinafter, with reference to FIGs. 2 to 25, a description is given of the information processing system 10 that can implement the integrated service providing system 20 of FIG. 1.

### (Configuration of Information Processing System)

FIG. 2 is an example of configuration of the information processing system 10 according to an embodiment. As illustrated in FIG. 2, the information processing system 10 includes, for example, an electronic information board 100, a MFP 900, a plurality of services 200, a management server 300, and an administration terminal 500. These plurality of apparatuses can communicate with each other via communication network 12.

The plurality of services 200 are provided in a cloud system 14. When the plurality of services 200 is provided to multiple terminal apparatuses including the electronic information board 100 and the MFP 900 via the communication network 12, the plurality of services 200 is available for use at the multiple terminal apparatuses including the electronic information board 100 and the MFP 900. Hereinafter, the plurality of services 200 may be referred to as the services 200 or the service 200.

The service 200 includes various services, such as print service, document management service, workflow service, contract management service, or the like. The service 200 may include not only the service 200 provided by one particular company (one's own company or first company) providing the management server 300 (i.e., company serving as a main management entity of the plurality of services 200), but also the service 200 provided by other company (second company different from first company).

The electronic information board 100 is an apparatus used by a conference participant or the like in a conference or meeting room in an office. For example, the electronic information board 100 can be used for displaying image, writing to image, or the like. Further, the electronic information board 100 can also use the plurality of services 200 (e.g., print service, document management service, workflow service) provided by the cloud system 14 via the communication network 12.

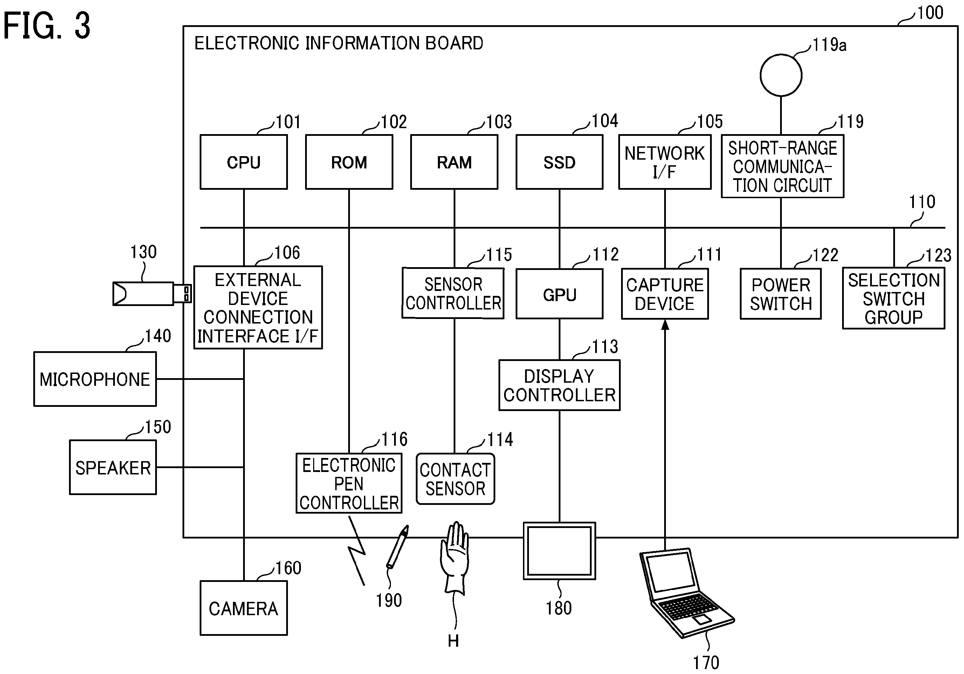

For example, the electronic information board 100 can be configured to print images displayed on the display 180 (see FIG. 3) using a print apparatus connected to the print service, using the print service.

Further, for example, the electronic information board 100 can store an image file created for images displayed on the display 180 to a file server or the like, using the document management service.

Further, for example, the electronic information board 100 can perform a workflow using an image file created for images displayed on the display 180, using the workflow service.

The MFP 900 is an apparatus used by employees or the like in office or the like. For example, the MFP 900 includes scanner function, printer function, copy function, document box function, facsimile function, or the like.

Further, the MFP 900 can also use the plurality of services 200 (e.g., print service, document management service, workflow service) provided by the cloud system 14 via the communication network 12.

For example, the MFP 900 can print images, scanned by performing the scanning function, using a print apparatus connected to the print service, using the print service.

Further, for example, the MFP 900 can store an image file created by scanning images using the scanning function in a file server or the like, using the document management service.

Further, for example, the MFP 900 can execute a workflow using an image file created by scanning images by performing the scanning function, using the workflow service.

In the embodiment, the electronic information board 100 and the MFP 900 are used as examples of "terminal apparatus" that can use the plurality of services 200. However, the terminal apparatus capable of utilizing the plurality of services 200 is not limited thereto. For example, the terminal apparatus can be PC, tablet terminal, smartphone, video conference terminal, camera, scanner, projector, handy printer, or the like.

The management server 300 is an example of information processing apparatus. The management server 300 is provided in the cloud system 14. The management server 300 functions as a platform for managing the plurality of services 200. For example, the management server 300 can perform various management related to the service 200, such as management of user of the service 200, management of the service 200, and management of contract of the service 200. For example, the management server 300 manages login information, contact information or the like for each subscriber who is a user of the service 200. With this configuration, the subscriber can log in to the cloud system 14 using the login information of the subscriber from the electronic information board 100, the MFP 900, or other terminal apparatus, and among the plurality of services 200 provided by the cloud system 14, the subscriber can use the service 200 that the subscriber has subscribed or made a contract.

The administration terminal 500 is used by a contract administrator 16 (person related to users) who manages the contracts. For example, the administration terminal 500 is the terminal apparatus used by the dealer 18 (FIG. 1), in which the dealer 18 may become the contract administrator 16. In the embodiment, a PC is used as the administration terminal 500, but other terminal apparatus may be used. For example, the administration terminal 500 is used by the contract administrator 16 when the contract administrator 16 subscribes or makes new contract, adding contract, and contract cancellation of the service 200 for a particular subscriber.

For example, the contract administrator 16 can log in to the management server 300 from the administration terminal 500, and then the contract administrator 16 can subscribe or make a new contract (i.e., enabling of service 200), subscribe or make adding contract (i.e., enabling of service 200), and can perform contract cancellation (i.e., disenabling of service 200) of the particular service 200 for the particular subscriber.

### (Configuration of Electronic Information Board)

FIG. 3 is an example of configuration of hardware block diagram of the electronic information board 100. As illustrated in FIG. 3, the electronic information board 100 includes, for example, central processing unit (CPU) 101, read only memory (ROM) 102, random access memory (RAM) 103, solid state drive (SSD) 104, network interface (I/F) 105, and external device connection (I/F) 106.

The CPU 101 controls the operation of the electronic information board 100 entirely. The ROM 102 stores programs, such as initial program loader (IPL), used for driving the CPU 101. The RAM 103 is used as a work area of the CPU 101. The SSD 104 stores various data, such as programs, used for the electronic information board 100.

The network I/F 105 controls communication with the communication network 12. The external device connection I/F 106 is an interface for connecting various external devices. The external device is, for example, universal serial bus (USB) memory 130, external device (microphone 140, speaker 150, camera 160).

Further, the electronic information board 100 includes, for example, capture device 111, graphics processing unit (GPU) 112, display controller 113, contact sensor 114, sensor controller 115, electron pen controller 116, short-range communication circuit 119, and antenna 119a for the short-range communication circuit 119, power switch 122, and selection switch group 123.

The capture device 111 causes a display of the external personal computer (PC) 170 to display image information as still image or movie image.

The GPU 112 is a semiconductor chip that specializes in graphics.

The display controller 113 controls and manages the screen display so as to output the output image from the GPU 112 to the display 180 or the like.

The contact sensor 114 detects that the electronic pen 190 and a user hand H or the like are brought into contact with the display 180.

The sensor controller 115 controls the processing of the contact sensor 114. The contact sensor 114 performs an input of coordinates and detection of coordinates using the infrared ray blocking method. As to the method of inputting coordinates and detecting coordinates, two light emission-reception devices disposed at the upper end corners of the display 180 radiate infrared rays parallel to the display 180, and the infrared rays are reflected by reflective members disposed around the display 180, and then the two light emission-reception receive the light beams coming from the optical path, which is the optical path of the light emitted by the two light emission-reception device.

The contact sensor 114 outputs identification (ID) of the infrared ray emitted by the two light emission-reception devices and blocked by an object to the sensor controller 115. The sensor controller 115 specifies or identifies the coordinate position where an object contacts on the display 180. By communicating with the electronic pen 190, the electronic pen controller 116 determines whether or not a pen tip or pen end touches the display 180.

The short-range communication circuit 119 is a communication circuit, such as near field communication (NFC) and Bluetooth (registered trademark). The power switch 122 is a switch for switching ON-OFF of power supply to the electronic information board 100. The selection switch group 123 is, for example, a group of switches used for adjusting the display brightness and colors of the display 180.

Further, the electronic information board 100 includes bus line 110. The bus line 110 is an address bus and a data bus for electrically connecting each of the components, such as the CPU 101, illustrated in FIG. 3.

Further, the contact sensor 114 can use not only the infrared blocking system, but also various detection means, such as a touch panel of electrostatic capacitance type that identifies a contact position by detecting a change in capacitance, a touch panel of resistance film type that identifies a contact position based on a voltage change of two resistive films, and a touch panel of electromagnetic induction type that detects a contact position by detecting the electromagnetic induction caused by a contact of an object on the touch panel.

Further, the electronic pen controller 116 can determine whether a user grip portion of the electronic pen 190 or other portion of the electronic pen 190 touches the display 280 in addition to the pen tip and pen end of the electronic pen 190.

### (Hardware Configuration of MFP)

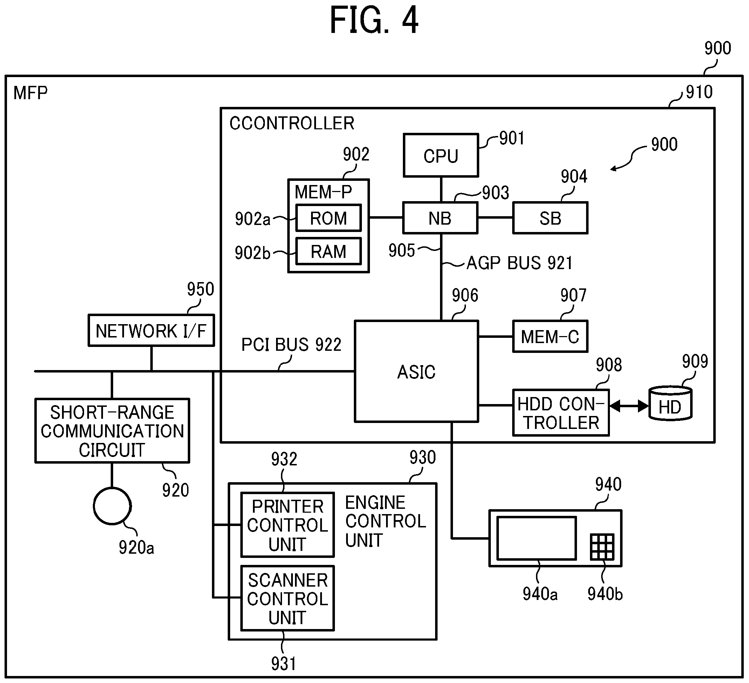

FIG. 4 is an example of configuration of hardware block diagram of the MFP 900. As illustrated in FIG. 4, the multifunction peripheral/product/printer (MFP) 900 includes, for example, controller 910, short-range communication circuit 920, engine control unit 930, operation panel 940, and network I/F 950.

As illustrated in FIG. 4, the controller 910 includes, for example, CPU 901, system memory (MEM-P) 902, north bridge (NB) 903, south bridge (SB) 904, application specific integrated circuit (ASIC) 906, local memory (MEM-C) 907 as storage, HDD controller 908, and HD 909 as storage, in which the NB 903 and the ASIC 906 are connected with each other using accelerated graphics port (AGP) bus 921.

The CPU 901 is a control unit that controls the MFP 900 entirely. The NB 903 is a bridge for connecting the CPU 901, the MEM-P 902, the SB 904 and the AGP bus 921. The NB 903 includes, for example, a memory controller that controls reading and writing to the MEM-P 902, and a peripheral component interconnect (PCI) master and an AGP target.

The MEM-P 902 includes, for example, ROM 902a and RAM 902b. The ROM 902a serves as a memory storing programs and data for implementing each function of the controller 910. The RAM 902b serves as a memory for loading programs and data, and for drawing data used for the printing operation. The programs stored in the RAM 902b may be provided by recording on a recording medium, readable by a computer, such as compact disc read-only memory (CD-ROM), CD-recordable (CD-R), digital versatile disc (DVD), or the like in files using installable format or executable format.

The SB 904 is a bridge for connecting the NB 903, the PCI device and peripheral device. The ASIC 906 is an integrated circuit (IC) designed for image processing application having a hardware element for image processing, and serves as a bridge to connect the AGP bus 921, PCI bus 922, the HDD controller 908, and the MEM-C 907 respectively. The ASIC 906 includes, for example, a memory controller that controls PCI target, AGP master, arbiter (ARB) that is a core of the ASIC 906, and the MEM-C 907, a plurality of direct memory access controllers (DMACs) that perform a rotation of image data using a hardware logic, and a PCI unit that transfers data to a scanner control unit 931 and a printer control unit 932 via the PCI bus 922. Further, the ASIC 906 can be connected to a universal serial bus (USB) interface or an interface of Institute of Electrical and Electronics Engineers 1394 (IEEE 1394).

The MEM-C 907 is a local memory used as a copy image buffer and a code buffer. The HD 909 is a storage for storing image data, storing font data used for printing, and storing forms. The HDD controller 908 controls reading or writing of data to the HD 909 under the control of the CPU 901. The AGP bus 921 is a bus interface used for a graphics accelerator card proposed for speeding up graphics processing, and the graphics accelerator card can be accelerated by accessing the MEM-P 902 directly with higher throughput.

The short-range communication circuit 920 is provided with the antenna 920a. The short-range communication circuit 920 is a communication circuit using, such as near field communication (NFC: registered trademark) or Bluetooth (registered trademark).

Further, the engine control unit 930 includes, for example, the scanner control unit 931 and the printer control unit 932.

Further, the operation panel 940 includes, for example, a panel display unit 940a and an input key 940b. The panel display unit 940a displays, for example, current setting values and a selection screen, and receives inputs from an operator. The input key 940b includes, for example, a numeric keypad used for inputting settings as conditions of image forming, such as density setting condition, and a start key for inputting an instruction of a start of copying.

The controller 910 controls the MFP 900 entirely. For example, the controller 910 controls drawing, communication, input from the operation panel 940. Each of the scanner control unit 931 or the printer control unit 932 includes, for example, an image processing unit for error diffusion and gamma conversion.

Further, by operating an application switching key on the operation panel 940, a document box function, a copying function, a printer function, and a facsimile function can be switched and selected for the MFP 900. When the document box function is selected, a document box mode is set, when the copying function is selected, a copying mode is set, when a printer function is selected, a printer mode is set, and when the facsimile function is selected, a facsimile mode is set.

Further, the network I/F 950 is an interface used for data communication using the communication network 12. The short-range communication circuit 920 and the network I/F 950 are electrically connected to the ASIC 906 via the PCI bus 922.

### (Hardware Configuration of Management Server)

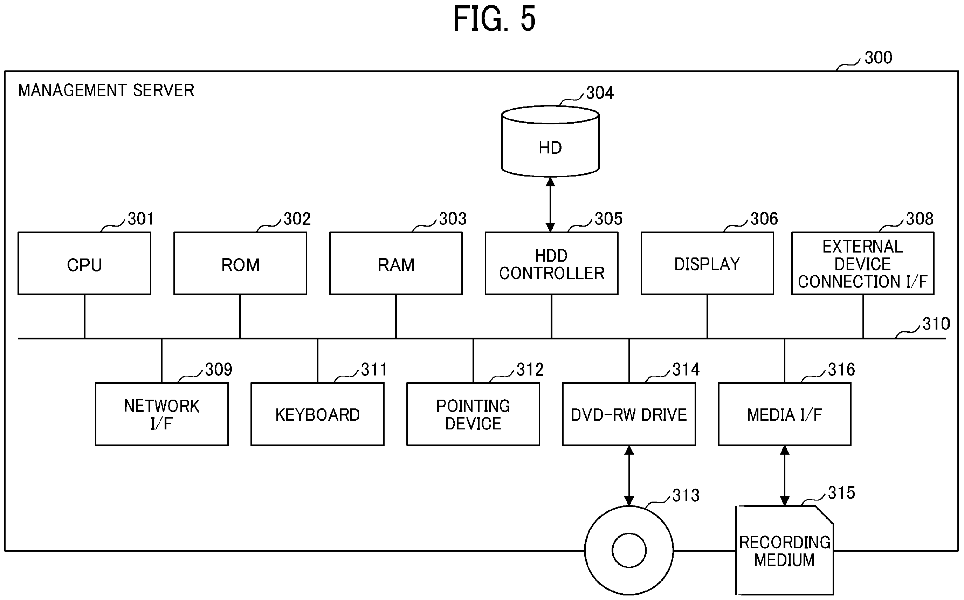

FIG. 5 is an example of configuration of hardware block diagram of the management server 300. As illustrated in FIG. 5, the management server 300 is configured by one or more computers. The management server 300 includes, for example, CPU 301, ROM 302, RAM 303, HD 304, hard disk drive (HDD) controller 305, display 306, external device connection interface (I/F) 308, network interface (I/F) 309, bus line 310, keyboard 311, pointing device 312, digital versatile disk rewritable (DVD-RW) drive 314, and media I/F 316.

The CPU 301 controls the operation of the management server 300 entirely. The ROM 302 stores programs used for driving the CPU 301, such as initial program loader (IPL). The RAM 303 is used as a work area of the CPU 301. The HD 304 stores various kinds of data, such as programs. The HDD controller 305 controls reading and writing of various data with the HD 304 under the control of the CPU 301. The display 306 displays various information such as cursors, menus, windows, characters, or images.

The external device connection I/F 308 is an interface for connecting various external devices. In this case, the external device is a universal serial bus (USB) memory, a printer, or the like. The network I/F 309 is an interface for performing data communication by utilizing the communication network 12. The bus line 310 is an address bus and a data bus for electrically connecting each of the components, such as the CPU 301, illustrated in FIG. 5.

The keyboard 311 is a type of input means having a plurality of keys for inputting characters, numerals, various instructions, or the like. The pointing device 312 is a type of input means for selecting and executing various instructions, selecting process target object, moving a cursor, or the like.

The DVD-RW drive 314 controls reading and writing of various data with the DVD-RW 313 used as an example of removable recording media. The removable recording media may be DVD recordable (DVD-R) in addition to or instead of DVD-RW. The media I/F 316 controls reading and writing (storing) of data with a recording medium 315, such as flash memory.

### (Hardware Configuration of Administration Terminal)

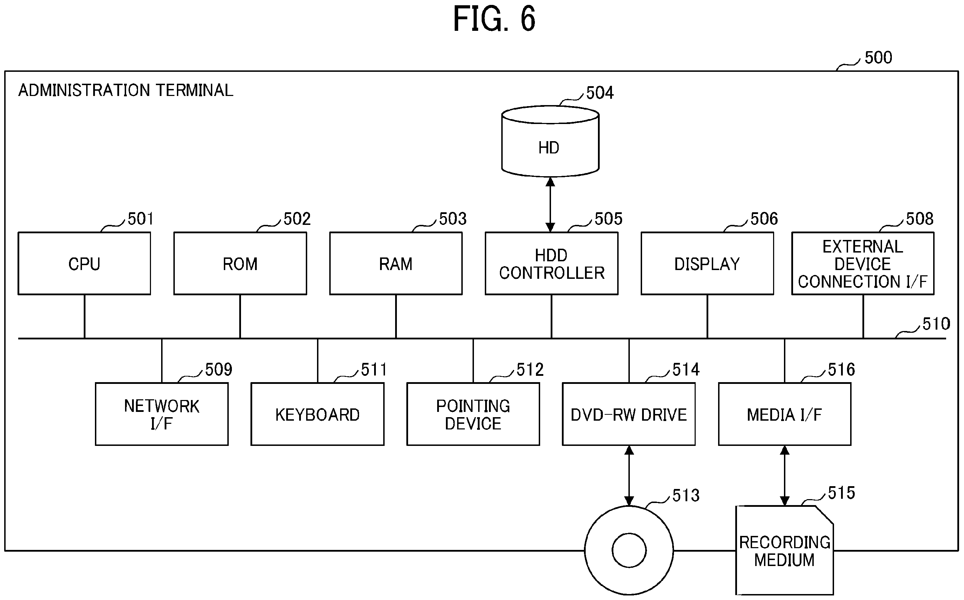

FIG. 6 is an example of configuration of hardware block diagram of the administration terminal 500. As illustrated in FIG. 6, the administration terminal 500 is configured by one or more computers. The administration terminal 500 includes, for example, CPU 501, ROM 502, RAM 503, HD 504, hard disk drive (HDD) controller 505, display 506, external device connection interface (I/F) 508, network I/F 509, bus line 510, keyboard 511, pointing device 512, digital versatile disk rewritable (DVD-RW) drive 514, and media I/F 516.

The CPU 501 controls the operation of the user information server 10 entirely. The ROM 502 stores programs used for driving the CPU 501, such as initial program loader (IPL). The RAM 503 is used as a work area of the CPU 501. The HD 504 stores various kinds of data, such as programs. The HDD controller 505 controls reading and writing of various data with the HD 504 under the control of the CPU 501. The display 506 displays various information such as cursors, menus, windows, characters, or images.

The external device connection I/F 508 is an interface for connecting various external devices. In this case, the external device is a universal serial bus (USB) memory, a printer, or the like. The network I/F 509 is an interface for performing data communication by utilizing the communication network 12. The bus line 510 is an address bus and a data bus for electrically connecting each of the components, such as the CPU 501, illustrated in FIG. 6.

The keyboard 511 is a type of input means having a plurality of keys for inputting characters, numerals, various instructions, or the like. The pointing device 512 is a type of input means for selecting and executing various instructions, selecting process target object, moving a cursor, or the like.

The DVD-RW drive 514 controls reading and writing of various data with the DVD-RW 513 used as an example of removable recording media. The removable recording media may be DVD recordable (DVD-R) in addition to or instead of DVD-RW. The media I/F 516 controls reading and writing (storing) of data with a recording medium 515, such as flash memory.

### (Functional Configuration of Management Server)

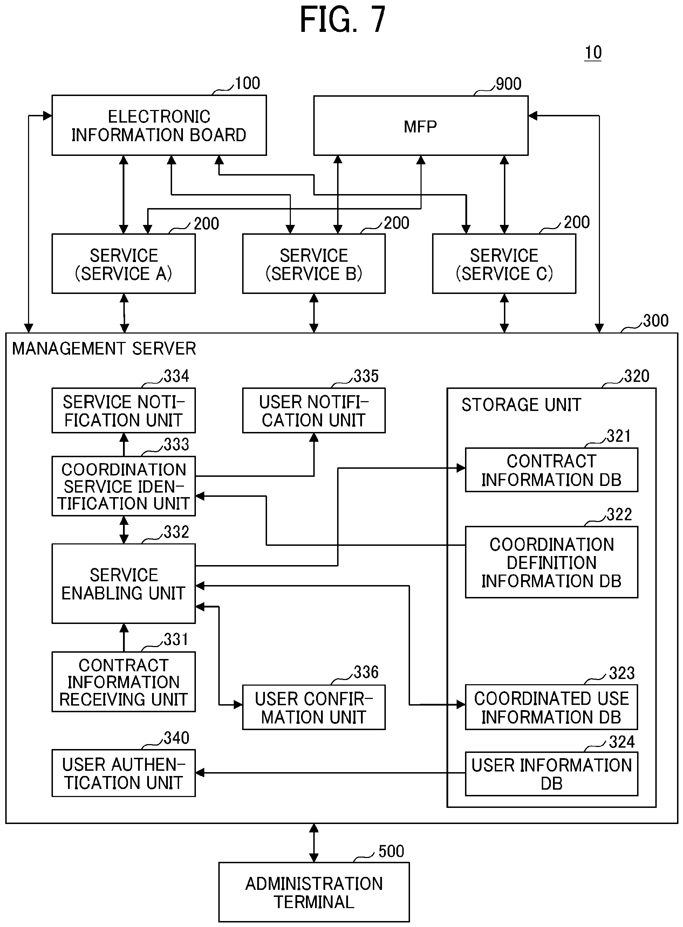

FIG. 7 illustrates an example of configuration of functional block diagram of the management server 300 according to the embodiment. As illustrated in FIG. 7, the management server 300 includes, for example, storage unit 320, contract information receiving unit 331, service enabling unit 332, coordination service identification unit 333, service notification unit 334, user notification unit 335, user confirmation unit 336, and user authentication unit 340.

The storage unit 320 stores various databases (DBs). Specifically, the storage unit 320 stores contract information DB 321, coordination definition information DB 322, coordinated use information DB 323, and user information DB 324.

The contract information DB 321 stores contract information indicating which service is subscribed for each user (i.e., which service is available for use for each user).

The coordination definition information DB 322 stores coordination definition information indicating which service is coordinated with which other service, for each service.

The coordinated use information DB 323 stores coordinated use information indicating which service coordination is actually used by each user.

The user information DB 324 stores user information on each user. The user information includes at least user identification (ID) and password required for user authentication processing.

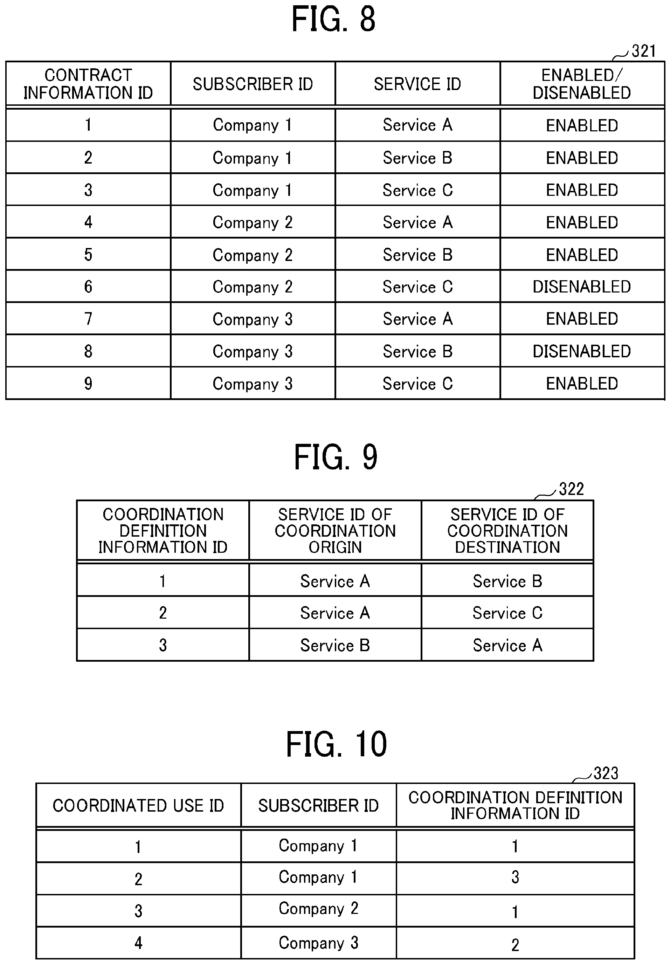

Further, examples of the contract information DB 321, the coordination definition information DB 322, and the coordinated use information DB 323 are to be described later with reference to FIGs. 8 to 10.

The contract information receiving unit 331 receives contract information of service transmitted from the administration terminal 500. For example, the contract information receiving unit 331 receives contract information related to new contract, contract information related to adding contract, and contract information related to contract cancellation.

The contract information related to new contract is transmitted from the administration terminal 500 when the contract administrator 16 subscribes or makes a new contract of the service 200 for a particular subscriber from the administration terminal 500. The contract information related to new contract includes at least subscriber ID of a subscriber who subscribes or makes the new contract and service ID of the service 200 subscribed by the new contract.

The contract information related to adding contract is transmitted from the administration terminal 500 when the contract administrator 16 subscribes or makes an adding contract of the service 200 for a particular subscriber from the administration terminal 500. The contract information related to adding contract includes at least subscriber ID of a subscriber who subscribes or makes an adding contract and service ID of the service 200 subscribed by the adding contract.

The contract information related to contract cancellation is transmitted from the administration terminal 500 when the contract administrator 16 performs the contract cancellation of the service 200 for a particular subscriber from the administration terminal 500. The contract information related to contract cancellation includes at least subscriber ID of a subscriber who performs the contract cancellation, and service ID of the service 200 cancelled by performing the contract cancellation.

The service enabling unit 332 enables or disenables the service 200 based on the contract information received by the contract information receiving unit 331.

For example, if the contract information receiving unit 332 receives the contract information related to new contract via the contract information receiving unit 331, the service enabling unit 332 sets "enabled (valid)" for a combination of the subscriber ID of the subscriber who subscribes or makes the new contract and the service ID of the service 200 subscribed by the new contract, indicated in the contract information, to the contract information DB 321. This enables the service 200 subscribed by the new contract.

Further, for example, if the contract information receiving unit 332 receives the contract information related to adding contract via the contract information receiving unit 331, the service enabling unit 332 sets "enabled (valid)" for a combination of the subscriber ID of the subscriber who subscribes or makes the adding contract and the service ID of the service 200 subscribed by the adding contract, indicated in the contract information, to the contract information DB 321. This enables the service 200 subscribed by the adding contract.

Further, for example, if the contract information receiving unit 332 receives the contract information related to contract cancellation via the contract information receiving unit 331, the service enabling unit 332 sets "disenabled (invalid)" for a combination of the subscriber ID of the subscriber who has cancelled the contract and the service ID of the service 200 of the canceled contract, indicated in the contract information, to the contract information DB 321. This disenables or invalidates the service 200 of the canceled contract.

When the service enabling unit 332 enables or disenables the service 200, the coordination service identification unit 333 identifies or determines the other service 200 coordinated with the service 200 based on the coordination definition information DB322.

When the coordination service identification unit 333 identifies other service 200 that is to be coordinated with the enabled service 200, among the enabled service 200 and other service 200 identified by the coordination service identification unit 333, the service notification unit 334 notifies the service 200, which becomes a coordination origin, to enable the coordination function with the other service 200, which becomes a coordination destination. For example, in response to receiving this enabling notice, the service 200 serving as the coordination origin enables graphical user interface (GUI) (e.g., selection button) used as a coordination function with the other service 200 serving as the coordination destination.

Further, when the coordination service identification unit 333 identifies other service 200 that is coordinated with the invalidated or disenabled service 200, the service notification unit 334 notifies the other service 200 that the coordination function with the invalidated or disenabled service 200 is invalidated or disenabled. For example, in response to receiving this disenabling notice, the other service 200 disenables a GUI (e.g., selection button) used for the coordination function with the disenabled service 200.

When one service 200 (first service) is added by subscribing or making the adding contract by a subscriber, and the added one service 200 (the service 200 serving as the coordination destination, first service) can be used in coordinated with other service 200 (the service 200 serving as the coordination origin, second service), the user notification unit 335 notifies the subscriber who has subscribed or made the adding contract that the added one service 200 (first service) serving as the coordination destination can be used from the other service 200 (second service) serving as the coordination origin. For example, this available-for-use notification is implemented by transmitting a message to a terminal apparatus to be used by the subscriber who has subscribed or made the adding contract.

When a subscriber cancels a contract of one service 200 (first service), and then the one service 200 (first service, the service 200 serving as the coordination destination) of the cancelled contract cannot be used from other service 200 (the service 200 serving as the coordination origin), the user confirmation unit 336 requests the subscriber to check whether the subscription-cancelled service 200 (first service, the service 200 serving as the coordination destination) is to be actually disenabled. For example, this disenabling confirmation is implemented by transmitting a message to the terminal apparatus used by the subscriber who has cancelled the contract.

The user authentication unit 340 obtains or acquires the login information transmitted from each terminal apparatus used by each subscriber (user), and performs authentication processing of each user based on the login information.

Specifically, if a combination of user ID and password included in the login information transmitted from each terminal apparatus matches a combination of user ID and password stored in the user information DB 324 in advance, the user authentication unit 340 determines a user authentication result that user authentication is verified or "success." In this case, for example, the service notification unit 334 notifies the user authentication result indicating the user authentication is verified to the service 200, which is available for use by the effective contract subscribed for the subscriber who has performed the login processing, with the user ID.

Further, the user authentication unit 340 also notifies the user authentication result indicating the user authentication is verified to the subscriber that has performed the log-in processing. This allows the subscriber who has performed the login processing to use the service 200 under the effective contract from each terminal apparatus subscribed by the subscriber.

On the other hand, if a combination of user ID and password included in the login information transmitted from each terminal apparatus does not match a combination of user ID and password stored in the user information DB 324 in advance, the user authentication unit 340 determines a user authentication result that the user authentication is not verified or "failed." In this case, for example, the user authentication unit 340 notifies the subscriber who has performed the login process that the login processing has failed.

Each function of the embodiments described above may be implemented by one or more processing circuits. Each of the functions of the above-described embodiments can be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA), and conventional circuit components arranged to perform the recited functions.

### (Contract Information DB)

FIG. 8 is an example of the contract information DB 321 according to the embodiment. As illustrated in FIG. 8, the contract information DB 321 associates information indicating whether each of a plurality of services ("ServiceA", "ServiceB", "ServiceC") provided by the cloud system 14 are "enabled" or "disenabled" with each subscriber ID identifying each subscriber of the service 200.

For example, in an example case in FIG. 8, "enabled" is associated with each of the service ID of "ServiceA," "ServiceB," and "ServiceC" for the subscriber ID of "Company 1 ." This means that the subscriber having the subscriber ID of "Company1" can use each of three services of "ServiceA," "ServiceB," and "ServiceC."

For example, the subscriber ID is set for each organization within a company called as a tenant. However, the subscriber ID may be set to other unit (e.g., each individual person belonging to the company).

Further, the contract information DB 321 illustrated in FIG. 8 indicates "enabled" and "disenabled" for each tenant and each service, but is not limited thereto. For example, the contract information DB 321 may indicate "enabled" and "disenabled" for each user belonging to each tenant and each service.

Further, the contract information DB321 may store a combination of the enabled subscriber ID and service ID alone.

### (Coordination Definition Information DB)

FIG. 9 is an example of the coordination definition information DB 322 according to the embodiment. As illustrated in FIG. 9, the coordination definition information DB322 stores coordination definition information ID identifying the coordination of the service 200, service ID identifying the service 200 serving as the coordination origin, and service ID identifying the service 200 serving as the coordination destination that can be coordinated with the service 200 serving as the coordination origin in association with each other.

For example, in an example case of FIG. 9, the service IDs of "ServiceB" and "ServiceC" of the service 200 serving as the coordination destination are associated with the service ID of "ServiceA" of the service 200 serving as the coordination origin. This means that two services 200 having service IDs of "ServiceB" and "ServiceC" can be used in coordination from the service 200 having the service ID of "ServiceA."

Further, as to the coordination definition information DB322, the combination of two services 200 can be used to define one-directional coordinated use and bidirectional coordinated use .

For example, in an example case of FIG. 9, as to the combination of "ServiceA" and "ServiceB," the coordination definition information DB 322 stores, for example, one coordination definition information (coordination definition information ID "1") setting the "ServiceA" as the coordination origin and "ServiceB" as the coordination destination, and another coordination definition information (coordination definition information ID "3") setting the "ServiceB" as the coordination origin and "ServiceA" as the coordination destination. That is, the bidirectional coordinated use can be applied to "ServiceA" and "ServiceB."

Further, in an example case of FIG. 9, as to the combination of "ServiceA" and "ServiceC," the coordination definition information DB 322 stores, for example, coordination definition information (coordination definition information ID "2") setting the "ServiceA" as the coordination origin and "ServiceC" as the coordination destination alone. That is, the one-directional coordinated use can be applied to "ServiceA" and "ServiceC."

### (Coordinated Use Information DB)

FIG. 10 is an example of the coordinated use information DB 323 according to the embodiment. As illustrated in FIG. 10, the coordinated use information DB 323 stores subscriber ID identifying the subscriber of the service 200 and coordination definition information ID identifying the coordination of the service 200 actually used by the subscriber in association with each other. The coordination definition information ID set in the coordinated use information DB 323 corresponds to the coordination definition information ID set in the coordination definition information DB 322 illustrated in FIG. 9.

For example, in an example case of FIG. 10, the coordination definition information IDs of "1" and "3" are associated with the subscriber ID of "Company1." This means that the subscriber having the subscriber ID of "Company 1" actually uses one coordination of the service 200 having the coordination definition information ID of "1" (coordination origin = "ServiceA," coordination destination = "ServiceB") illustrated in FIG. 9, and another coordination of the service 200 having the coordination definition information ID of "3" (coordination origin = "ServiceB," coordination destination = "ServiceA") illustrated in FIG. 9.

Further, as to the information registration to the coordinated use information DB 323 (i.e., whether or not the coordination function of the service 200 is used), for example, the contract administrator 16 can manually perform the information registration to the coordinated use information DB 323, or the management server 300 may automatically perform the information registration to the coordinated use information DB 323 based on the utilization state of the coordination function of the service 200.

### (Processing of Subscribing New Contract)

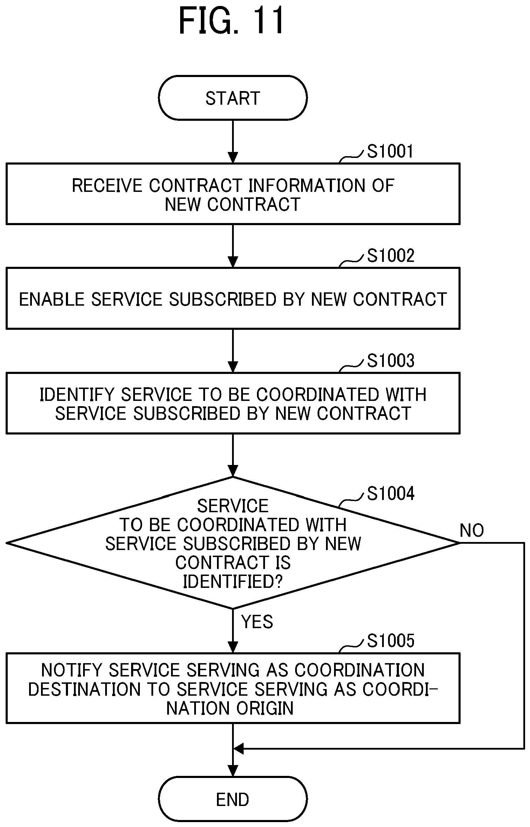

FIG. 11 is a flowchart illustrating processing of subscribing a new contract performed by the management server 300 according to the embodiment.

At first, the contract information receiving unit 331 receives contract information related to new contract transmitted from the administration terminal 500 via the communication network 12 (step S1001). The contract information related to new contract includes at least subscriber ID identifying a subscriber and service ID identifying the service 200 subscribed by the new contract. Further, if the plurality of services 200 is newly subscribed, the contract information related to new contract includes service IDs of the plurality of services 200.

Then, based on the contract information received in step S 1001, the service enabling unit 332 enables the service 200 subscribed by the new contract for the subscriber who has subscribed or made the new contract (step S1002). Specifically, the service enabling unit 332 sets "enabled" to a combination of the subscriber ID of the subscriber who has subscribed or made the new contract and the service ID of the service 200 subscribed by the new contract, to the contract information DB 321.

Then, the coordination service identification unit 333 identifies or determines a particular service 200 to be coordinated with the service 200 subscribed by the new contract (step S 1003). Specifically, by referring to the coordination definition information DB 322, the coordination service identification unit 333 identifies other service ID of other service 200 (particular service 200) that is associated with the service ID of the service 200 subscribed by the new contract as the other service 200 (particular service 200) that is coordinated with the service 200 subscribed by the new contract. For example, if the service 200 subscribed by the new contract is "ServiceA," the coordination service identification unit 333 identifies "ServiceB" and "ServiceC" as the particular service 200 set as coordination service, based on the coordination definition information DB 322 (FIG. 9).

Then, the service notification unit 334 determines whether or not the particular service 200 to be coordinated with the service 200 subscribed by the new contract is identified in step S1003 (step S1004).

If the service notification unit 334 determines in step S1004 that the to-be-coordinated particular service 200 is not identified (step S 1004: NO), the management server 300 terminates the sequence illustrated in FIG. 11.

On the other hand, if the service notification unit 334 determines in step S1004 that the to-be-coordinated particular service 200 is identified (step S1004: YES), among the service 200 subscribed by the new contract and the to-be-coordinated particular service 200, the service notification unit 334 notifies the service 200 serving as the coordination origin that the particular service 200 serving as the coordination destination can be available for use (step S1005). Then, the management server 300 terminates the sequence illustrated in FIG. 11.

For example, in step S1005, if the service 200 of "ServiceA" subscribed by the new contract serves as the coordination origin and to-be-coordinated particular services 200 of "ServiceB" and "ServiceC" serve as the coordination destination, the service notification unit 334 notifies "ServiceA" that the subscriber who has subscribed or made the new contract can use "ServiceB" and "ServiceC" from "ServiceA" in a coordinated manner. When "ServiceA" receives this notification, for example, "ServiceA" enables the functionality of using "ServiceB" and "ServiceC" in the coordinated manner at a GUI of "ServiceA," which is provided to the subscriber who has subscribed or made the new contract. This allows the subscriber who has subscribed or made the new contract to use "ServiceB" and "ServiceC" from the GUI of "ServiceA" by using a terminal apparatus, such as IWB 100.

Further, for example, in step S 1005, if the service 200 of "ServiceA" subscribed by the new contract serves as the coordination destination and to-be-coordinated particular service 200 of "ServiceB" serves as the coordination origin, the service notification unit 334 notifies "ServiceB" that the subscriber who has subscribed or made the new contract can use "ServiceA" from "ServiceB" in a coordinated manner. When "ServiceB" receives this notification, for example, "ServiceB" enables the functionality of using "ServiceA" in the coordinated manner at a GUI of "ServiceB," which is provided to the subscriber who has subscribed or made the new contract. This allows the subscriber who has subscribed or made the new contract to use "ServiceA" from the GUI of "ServiceB" using a terminal apparatus, such as IWB 100.

### (Processing of Adding Contract)

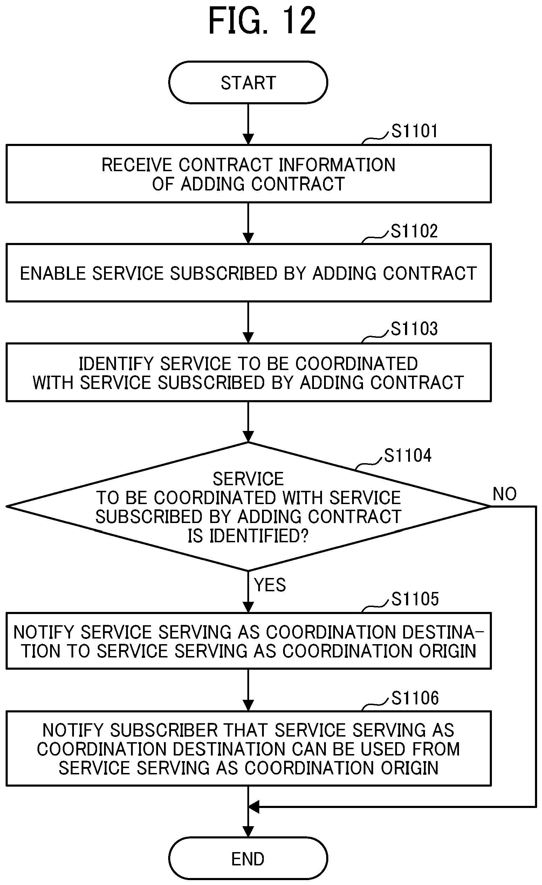

FIG. 12 is a flowchart illustrating a processing of adding contract performed by the management server 300 according to the embodiment.

At first, the contract information receiving unit 331 receives contract information related to adding contract transmitted from the administration terminal 500 via the communication network 12 (step S1101). The contract information related to adding contract includes at least subscriber ID identifying the subscriber and service ID identifying the service 200 subscribed by the adding contract. Further, if the adding contract of a plurality of services 200 is subscribed, the contract information related to adding contract includes service IDs of the plurality of services 200.

Then, based on the contract information related to adding contract received in step S1101, the service enabling unit 332 enables the service 200 subscribed by the adding contract for the subscriber who has subscribed or made the adding contract (step S1102). Specifically, the service enabling unit 332 sets "enabled" to a combination of the subscriber ID of the subscriber who has subscribed or made the adding contract and the service ID of the service 200 subscribed by the adding contract, to the contract information DB 321.

Then, the coordination service identification unit 333 identifies the service 200 to be coordinated with the service 200 subscribed by the adding contract (step S1103).

Specifically, by referring to the coordination definition information DB 322, the coordination service identification unit 333 identifies other service ID of other service 200 (particular service 200) that is associated with the service ID of the service 200 subscribed by the adding contract as the other service 200 (particular service 200) that is coordinated with the service 200 subscribed by the adding contract. For example, if the service 200 subscribed by the adding contract is "ServiceC," the coordination service identification unit 333 identifies "ServiceA" as the particular service 200 used as the coordination service, based on the coordination definition information DB 322 (FIG. 9).

Then, the service notification unit 334 determines whether or not the particular service 200 to be coordinated with the service 200 subscribed by the adding contract is identified in step S1103 (step S1104).

If the service notification unit 334 determines in step S 1104 that the to-be-coordinated particular service 200 is not identified (step S1104: NO), the management server 300 terminates the sequence illustrated in FIG. 12.

On the other hand, if the service notification unit 334 determines in step S1104 that the to-be-coordinated particular service 200 is identified (step S1104: YES), among the service 200 subscribed by the adding contract and the to-be-coordinated particular service 200, the service notification unit 334 notifies the service 200 serving as the coordination origin that the particular service 200 serving as the coordination destination can be available for use (step S1105).

For example, in step S1105, if the service 200 of "ServiceC" subscribed by the adding contract serves as the coordination destination and to-be-coordinated particular service 200 of"ServiceA" serves as the coordination origin, the service notification unit 334 notifies "ServiceA" so that the subscriber who has subscribed or made the adding contract can use "ServiceC" from "ServiceA" in a coordinated manner.

When "ServiceA" receives this notification, for example, "ServiceA" enables the functionality of using "ServiceC" in the coordinated manner at a GUI of "ServiceA," which is provided to the subscriber who has subscribed or made the adding contract. This allows the subscriber who has subscribed or made the adding contract to use "ServiceC" from the GUI of "ServiceA" using a terminal apparatus, such as IWB 100.

Then, the user notification unit 335 notifies the subscriber that the service serving as the coordination destination can be used from the service serving as the coordination origin (step S1106). Then, the management server 300 terminates the sequence illustrated in FIG. 12.

For example, in step S1106, if "ServiceC" can be used from "ServiceA" in the coordinated manner by subscribing or making the adding contract of "ServiceC," the user notification unit 335 transmits to a terminal apparatus used by the subscriber, a message such as "Thank you for subscribing contract of ServiceC. The coordination setting for ServiceC is also found on setting screen of ServiceA," and then the message is displayed on a display of the terminal apparatus used by the subscriber who has subscribed or made the adding contract. However, the notification is not limited thereto. For example, another notification method, such as transmitting the message to a given email address, can be used.

### (Processing of Contract Cancellation)

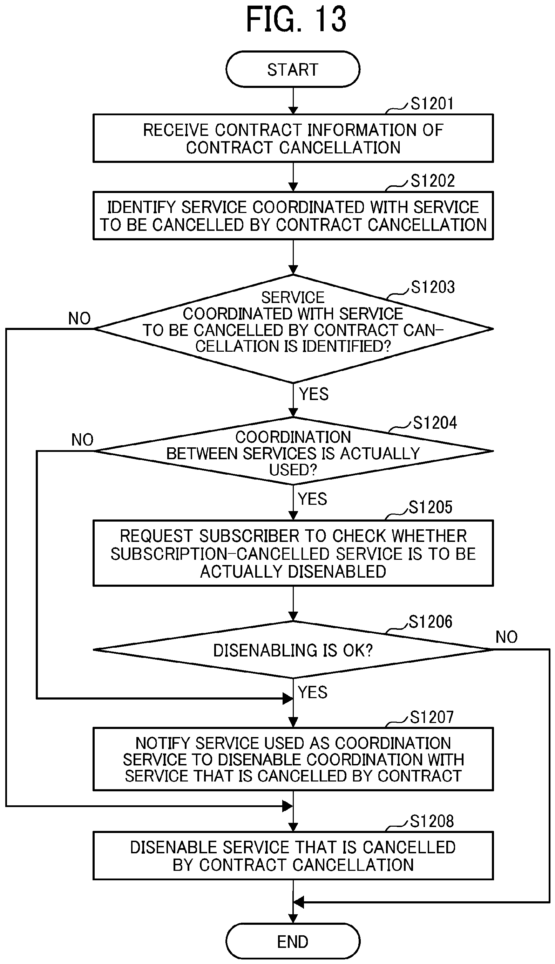

FIG. 13 is a flowchart illustrating a processing of contract cancellation performed by the management server 300 according to the embodiment.

At first, the contract information receiving unit 331 receives contract information related to contract cancellation transmitted from the administration terminal 500 via the communication network 12 (step S1201). The contract information related to contract cancellation includes at least subscriber ID identifying the subscriber and service ID identifying the service 200 to be cancelled. Further, if the contract cancellation of the plurality of services 200 is performed, the contract information related to contract cancellation includes service IDs of the plurality of services 200.

Then, the coordination service identification unit 333 identifies the service 200 coordinated with the service 200 that is to be cancelled by performing the contract cancellation (step S1202).

Specifically, by referring to the coordination definition information DB 322, the coordination service identification unit 333 identifies other service ID of other service 200 (particular service 200) that is associated with the service ID of the service 200 to be cancelled by performing the contract cancellation as the other service 200 (particular service 200) that is coordinated with the service 200 to be cancelled by performing the contract cancellation. For example, if the service 200 to be cancelled by performing the contract cancellation is "ServiceB," the coordination service identification unit 333 identifies "ServiceA" as the particular service 200 used as the coordination service, based on the coordination definition information DB 322 (FIG. 9).

Then, the service notification unit 334 determines whether or not the particular service 200, identified as the service coordinated with the service 200 to be canceled by performing the contract cancelation, is identified in step S1202 (step S1203).

If the service notification unit 334 determines in step S1203 that the particular service 200 used as the coordination service is not identified (step S1203: NO), based on the contract information related to contract cancellation received in step S1201, the service enabling unit 332 disenables the service 200 that is cancelled by performing the contract cancellation for the subscriber who has cancelled the contract.

Specifically, the service enabling unit 332 sets "disenabled" to a combination of the subscriber ID of the subscriber who has canceled the contract and the service ID of the service 200 that is cancelled, to the contract information DB 321. Then, the management server 300 terminates the sequence illustrated in FIG. 13.

On the other hand, if the service notification unit 334 determines in step S1203 that the particular service 200 used as the coordination service is identified (step S1203: YES), by referring to the coordinated use information DB 323, the service enabling unit 332 determines whether the coordination between the service 200 that is cancelled by performing the contract cancellation and the particular service 200 used as the coordination service is actually used by the subscriber who has cancelled the contract (step S1204).

If the service enabling unit 332 determines in step S1204 that the coordination between the service 200 that is cancelled by performing the contract cancellation and the particular service 200 used as the coordination service is actually used by the subscriber who has cancelled the contract (step S1204: YES), the user confirmation unit 336 requests the subscriber to check whether the subscription-cancelled service 200 is to be actually disenabled (step S1205).

For example, if "ServiceB" is cancelled by performing the contract cancellation, and thereby the coordinated use of "ServiceB" cannot be performed from "ServiceA," the user confirmation unit 336 transmits to a terminal apparatus used by the subscriber, a message such as "Coordinated use of ServiceB from ServiceA cannot be used. Do you really cancel contract?", and then the message is displayed on a display of the terminal apparatus used by the subscriber.

Then, based on a result confirmed by the subscriber in step S1205, the user confirmation unit 336 determines whether the service 200 that is canceled by the contract cancellation is to be invalidated or disenabled (step S1206).

If the service enabling unit 332 determines in step S1204 that the coordination between the service 200 that is cancelled by performing the contract cancellation and the particular service 200 used as the coordination service is not actually used by the subscriber who has cancelled the contract (step S1204: NO), or if the service enabling unit 332 determines in step S1206 that the service 200 that is cancelled by performing the contract cancellation is to be invalidated or disenabled (step S1206: YES), the service notification unit 334 notifies the particular service 200 used as the coordination service to disenable the coordination with the service 200 that is cancelled by performing the contract cancellation (step S1207).

Then, the service enabling unit 332 disenables the service 200, which is cancelled by performing the contract cancellation, for the subscriber who has cancelled the contract (step S1208). Specifically, the service enabling unit 332 deletes the association of the subscriber ID of the subscriber who has cancelled the contract and the service ID of the service 200 that is cancelled by performing the contract cancellation, from the contract information DB 321. Then, the management server 300 terminates the sequence illustrated in FIG. 13.

On the other hand, if the user confirmation unit 336 determines in step S1206 that the service 200 that is cancelled by the contract is not to be disenabled (step S1206: NO), the management server 300 terminates the sequence illustrated in FIG. 13. In this case, since the subscriber does not want to disenable the coordination of the service 200, the contract cancellation of the service 200 is aborted or suspended.

### (Display Screen When Subscribing Adding Contract)

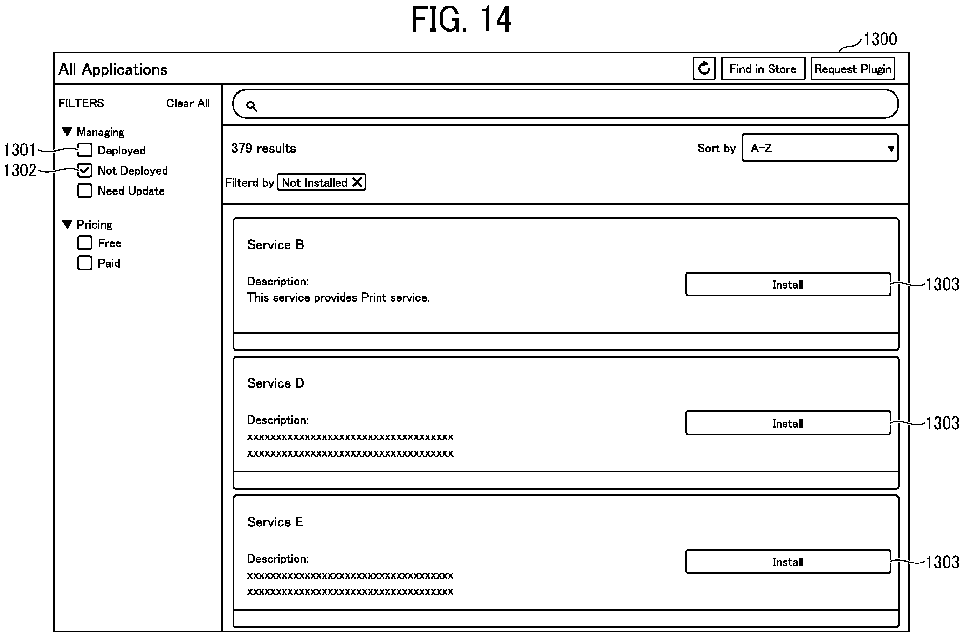

FIGs. 14 to 16 are examples of display screen being displayed on the administration terminal 500 when subscribing or making an adding contract of the service 200.

FIGs. 14 to 16 are examples of a display screen 1300 displayed on a display of the administration terminal 500. The display screen 1300 is a display screen of application used for managing the contract of the service 200 of a specific subscriber, such as subscriber A. When the contract administrator 16 who manages the contracts logs in to the management server 300 from the administration terminal 500, the display screen 1300 can be used by the administration terminal 500. The contract administrator 16 can use the display screen 1300 to check the being-subscribed service 200, check non-subscribed service 200, add the service 200 by the adding contract, and cancel the service 200 by the contract cancelation. As illustrated in FIG. 14, the display screen 1300 includes, for example, a check box 1301 and a check box 1302.

The check box 1301 is indicated with text of "Deployed." When the contract administrator 16 selects the check box 1301, based on the contract information of the subscriber A set in the contract information DB 321 of the management server 300, the display screen 1300 displays a list of a plurality of services 200 being subscribed by the subscriber A, from a plurality of services 200 provided by the cloud system 14.

The check box 1302 is indicated with text of "Not Deployed." When the contract administrator 16 selects the check box 1302, based on the contract information of the subscriber A set in the contract information DB 321 of the management server 300, the display screen 1300 displays a list of a plurality of services 200 not being subscribed by the subscriber A, from a plurality of services 200 provided by the cloud system 14.

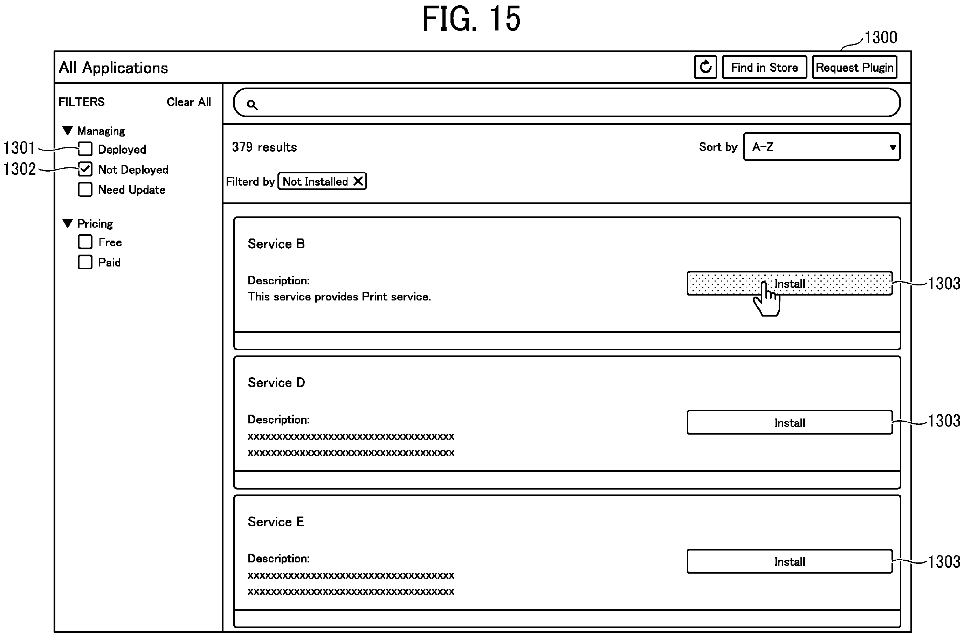

The contract administrator 16 can use the display screen 1300 to subscribe or make an adding contract of the service 200. For example, in an example of FIGs. 14 and 15, the display screen 1300 displays three services 200 of "ServiceB," "ServiceD," and "ServiceE," which are not subscribed by the subscriber A. As illustrated in FIG. 14, the display screen 1300 includes an install button 1303, denoted by "Install," for each service 200. Further, the two services 200 of "ServiceA" and "ServiceC" not displayed on the display screen 1300 are the services 200 being subscribed by the subscriber A. For example, as illustrated in FIG. 15, the contract administrator 16 can subscribe or make an adding contract of"ServiceB" by pressing the install button 1303 of "ServiceB."

In this case, the administration terminal 500 transmits contract information related to adding contract of "ServiceB" to the management server 300. In response to receiving the contract information, the management server 300 performs the processing of adding contract described above to add "ServiceB" to the subscriber ID of the subscriber A in the contract information DB 321 to enable the subscriber A to use "ServiceB." As a result, the subscriber A can use three services 200 of "ServiceA," "ServiceB," and "ServiceC."

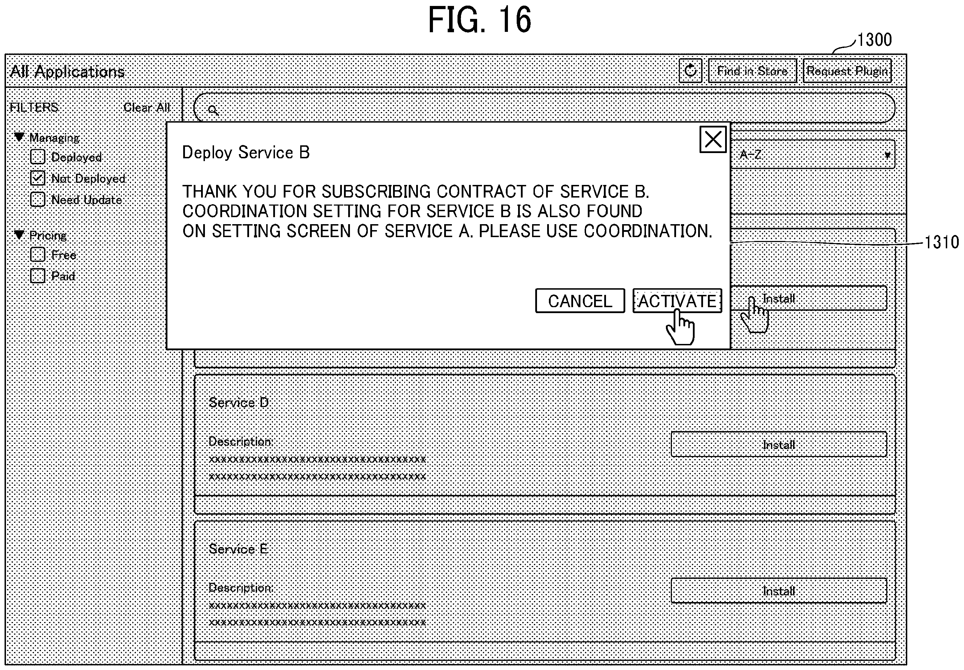

Then, as described above, the coordinated use of "ServiceB" from "ServiceA" can be performed. Then, the management server 300 transmits to the administration terminal 500, a message of "Thank you for subscribing contract of ServiceB. The coordination setting for ServiceB is also found on setting screen of ServiceA. Please use coordination." As illustrated in FIG. 16, the administration terminal 500 can notify the message to the contract administrator 16 by displaying the message using a pop-up screen 1310.

### (Display Screen being Displayed When Canceling Contract of Service)

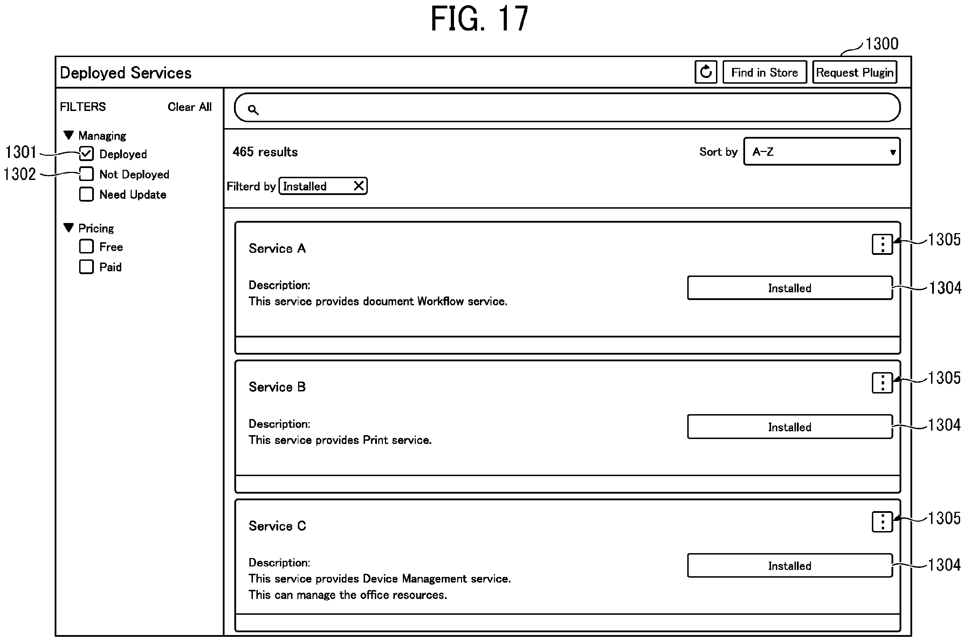

FIGs. 17 to 20 are examples of display screen being displayed on the administration terminal 500 when canceling a contract of the service 200.

In an example case of FIG. 17, the check box 1301 is selected by the contract administrator 16 on the display screen 1300 as similar to the display screen 1300 in FIGs. 14 to 16. Then, the display screen 1300 displays a list of three services 200 of "ServiceA," "ServiceB," and "ServiceC" being subscribed by the subscriber A. As illustrated in FIG. 17, the display screen 1300 displays an installed button 1304 (Installed) indicating that the service 200 is being subscribed, instead of the installation button 1303 illustrated in FIGs. 14 to 16.

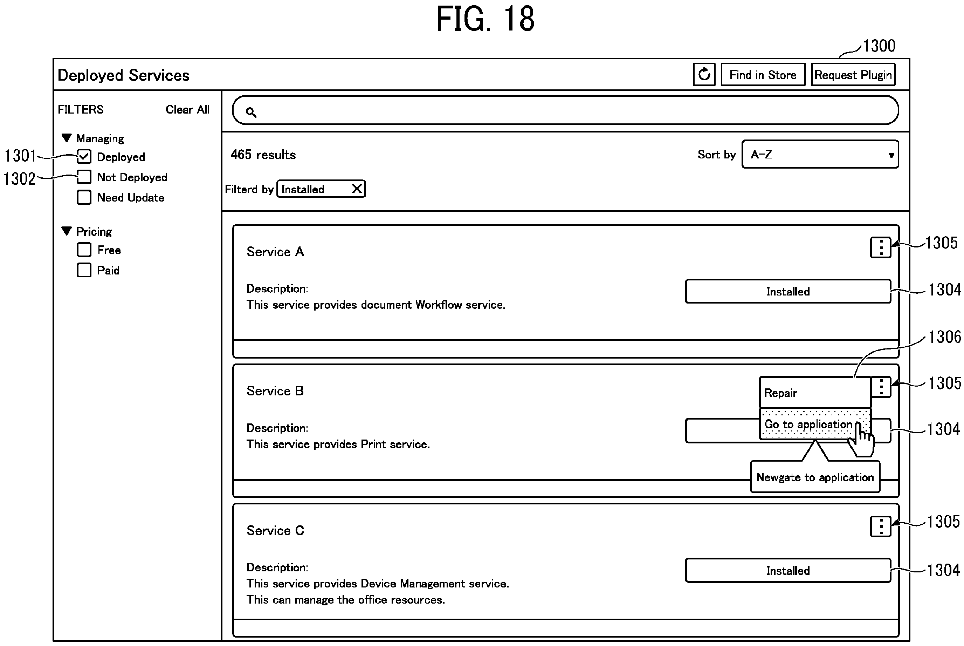

Further, as illustrated in FIG. 17, the display screen 1300 displays a drop-down button 1305 for each service 200. When the contract administrator 16 selects the drop-down button 1305 of the service 200 on the display screen 1300 to display a drop-down list 1306 (see FIG. 18), the contract administrator 16 can select any action from the drop-down list 1306.

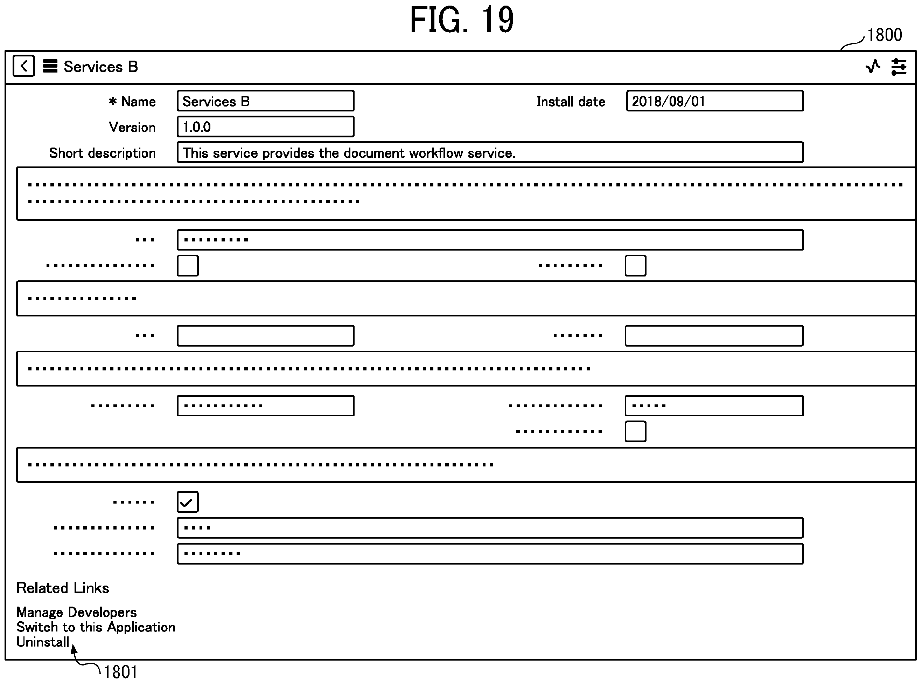

For example, in an example case of FIG. 18, the display screen 1300 displays the drop-down list 1306 of "ServiceB" when the drop-down button 1305 of "ServiceB" is selected by the contract administrator 16. Then, in the drop-down list 1306, an action denoted by "Go to application" is selected by the contract administrator 16. As a result, as illustrated in FIG. 19, the display of the administration terminal 500 displays a service detail screen 1800 displaying the detailed contents of "ServiceB."

The contract administrator 16 can use the service detail screen 1800 to cancel the contract of "ServiceB." Specifically, as illustrated in FIG. 19, the service detail screen 1800 displays a link 1801 indicating "uninstall." If the contract administrator 16 presses the link 1801, the contract administrator 16 can cancel the contract of "ServiceB." In this case, the contract information related to contract cancellation of "ServiceB" is transmitted to the management server 300 from the administration terminal 500.

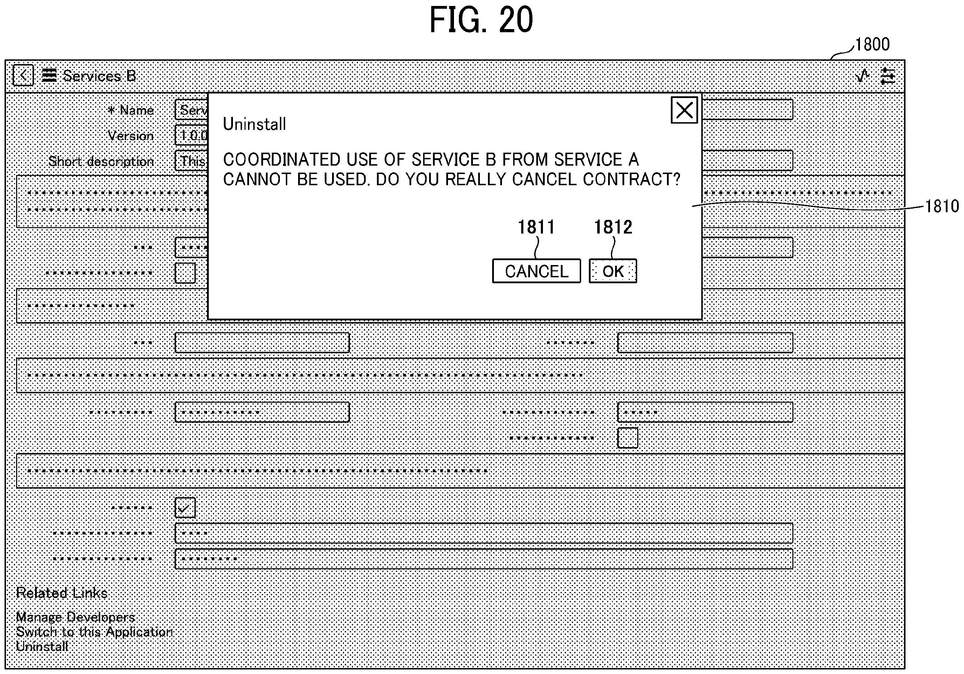

Then, as described above, at this timing, the coordinated use of "ServiceB" from "ServiceA" can be performed. Therefore, the management server 300 transmits a message of "Coordinated use of ServiceB from ServiceA cannot be used. Do you really cancel contract?" to the administration terminal 500. As illustrated in FIG. 20, the administration terminal 500 can notify the message to the contract administrator 16 by displaying the message using a pop-up screen 1810.

As illustrated in FIG. 20, cancel button 1811 and OK button 1812 are displayed on the pop-up screen 1810. When the contract administrator 16 selects the cancel button 1811, the contract administrator 16 can abort or suspend the contract cancellation of "ServiceB." On the other hand, when the contract administrator 16 selects the OK button 1812, the contract administrator 16 can confirm the contract cancellation of "ServiceB." Then, the confirmation of contract cancellation of "ServiceB" or the aborting or suspending of contract cancellation of "ServiceB" is notified to the management server 300 from the administration terminal 500.

When the management server 300 receives a notification of confirmation of contract cancellation of "ServiceB," the management server 300 performs the above described contract cancellation, in which "ServiceB" associated with the subscriber ID of the subscriber A is deleted from the contract information DB 321 to disenable the use of "ServiceB" by the subscriber A. As a result, the remaining two services 200 of "ServiceA" and "ServiceC" can be used by the subscriber A.

### (First Example of Coordination Function of Service)

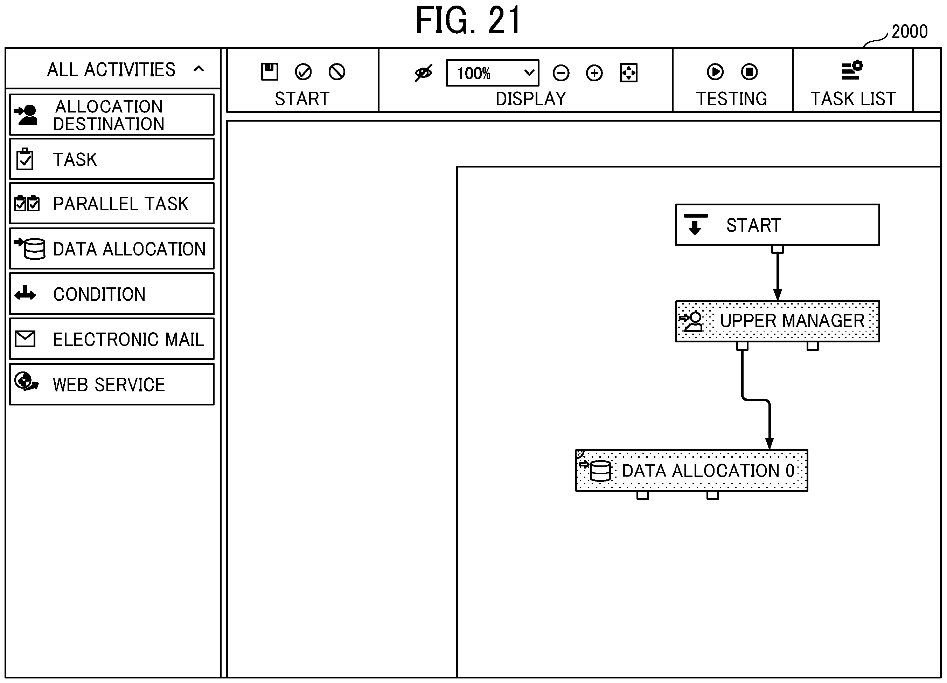

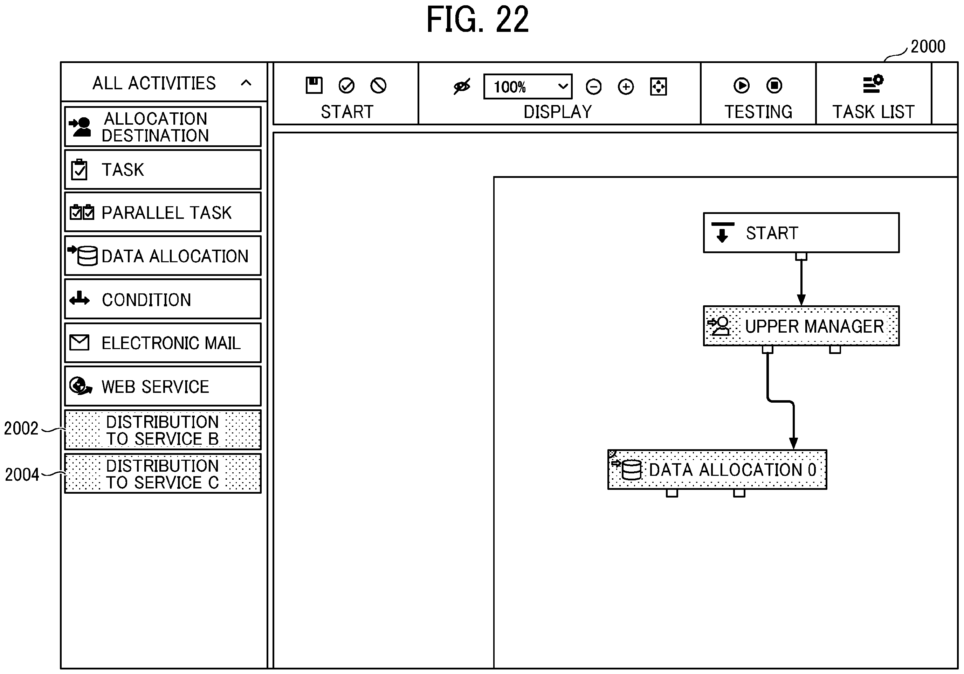

FIGs. 21 and 22 are diagrams illustrating a first example of coordination function of the service 200 provided to a subscriber. The display screen 2000, illustrated in FIGs. 21 and 22, is a display screen that is displayed on a display of a terminal apparatus (e.g., PC, tablet terminal, smartphone) used by the subscriber A. The display screen 2000 is a workflow creation screen provided by a workflow service (an example of "ServiceA" described above). The subscriber A can use the display screen 2000 to create a work flow.

FIG. 21 illustrates the display screen 2000 before subscribing or making the contract of "ServiceB" and "ServiceC" by the subscriber A. FIG. 22 illustrates the display screen 2000 after subscribing or making the contract of "ServiceB" and "ServiceC" by the subscriber A.

As illustrated in FIG. 22, the display screen 2000 displays distribution buttons 2002 and 2004 for utilizing the coordination function of "ServiceB" and "ServiceC" in response to the enabling of the coordination function of "ServiceB" and "ServiceC".

For example, the subscriber A can distribute a workflow created on the display screen 2000 to "ServiceB" by selecting the distribution button 2002. Further, for example, the subscriber A can distribute the workflow created on the display screen 2000 to the "ServiceC" by selecting the distribution button 2004.

### (Second Example of Coordination Function of Service)

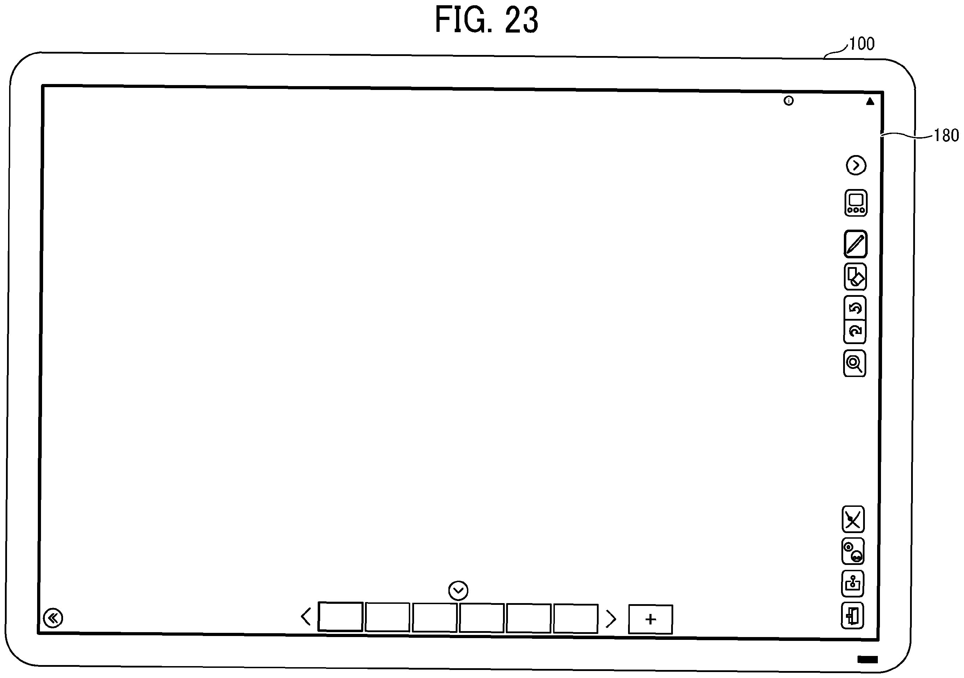

FIGs. 23 and 24 are diagrams illustrating a second example of coordination function of the service 200 provided to a subscriber. FIGs. 23 and 24 illustrate an example of displaying performed on the display 180 of the electronic information board 100 when one subscriber, such as subscriber A, is utilizing a service (an example of the "ServiceA" described above) from the electronic information board 100. The subscriber A can write any content to the display 180.

FIG. 23 illustrates the display 180 before subscribing or making the contract of "ServiceB" and "ServiceC" by the subscriber A. FIG. 24 illustrates the display 180 after subscribing or making the contract of "ServiceB" and "ServiceC" by the subscriber A. In this example case, "ServiceB" is a print service that can be used as the coordination service from "ServiceA," and "ServiceC" is a workflow service that can be used as the coordination service from "ServiceA."

By enabling the coordination function of "ServiceB" (print service) and "ServiceC" (workflow service), as illustrated in FIG. 24, the display 180 displays a print button 2302 for utilizing the coordination function of "ServiceB," and a review request button 2304 for utilizing the coordination function of "ServiceC."

For example, by selecting the print button 2302, the subscriber A can distribute the contents displayed on the display 180 to "ServiceB" (print service) to perform the printing.

Further, for example, by selecting the review request button 2304, the subscriber A can distribute the contents displayed on the display 180 to the ServiceC (workflow service) to request the reviewing.

### (Processing of User Authentication by Information Processing System)

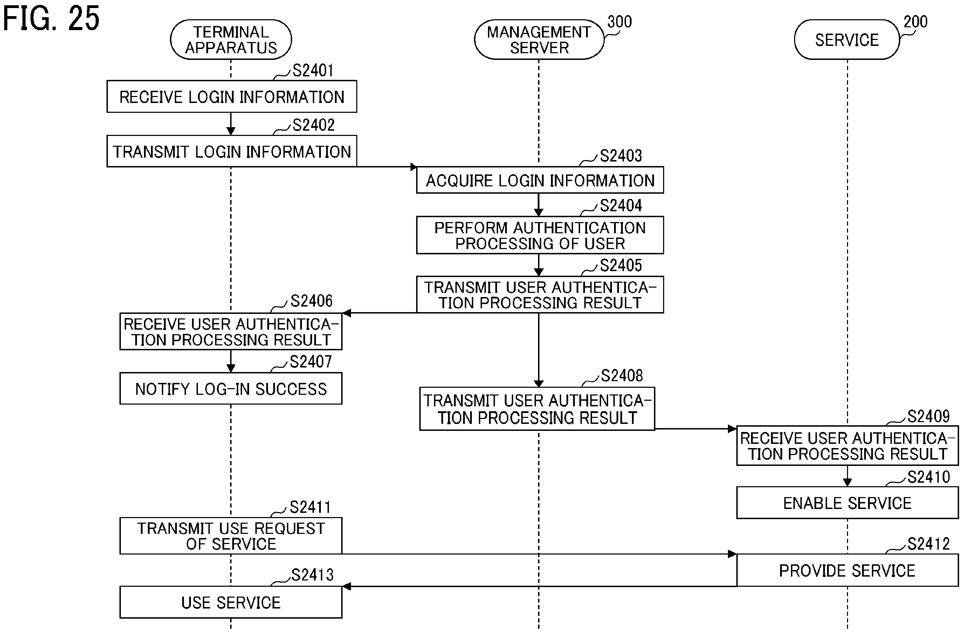

FIG. 25 is a sequence diagram illustrating a procedure of user authentication processing by the information processing system 10 according to the embodiment.

At first, the terminal apparatus, such as IWB 100 and MFP 900, receives login information from a subscriber (step S2401). For example, the login information includes user ID and password of the subscriber.

Then, the terminal apparatus transmits the input login information to the management server 300 via the communication network 12 (step S2402).

Then, at the management server 300, the user authentication unit 340 obtains or acquires the login information transmitted from the terminal apparatus (step S2403).

Then, the user authentication unit 340 performs authentication processing of the user based on the login information and the user information DB 324 provided for the management server 300 (step S2404).

Then, if the user authentication processing is successful in step S2404, the user authentication unit 340 transmits the user authentication processing result indicating that the user authentication process is successful to the terminal apparatus (step S2405).

When the terminal apparatus receives the user authentication processing result (step S2406), the terminal apparatus notifies the subscriber that the user (subscriber) has successfully logged in (step S2407)

Further, at the management server 300, the service notification unit 334 transmits to the service 200 being subscribed by the subscriber who has performed the login processing, the user authentication processing result indicating that the user authentication process has been successful, with the user ID (step S2408). If the subscriber who has performed the login processing is being in contract with a plurality of services 200, the service notification unit 334 transmits the user authentication processing result to each of the plurality of services 200.

When the service 200 receives the user authentication processing result (step S2409), the service 200 enables a use of the service 200 for the user ID included in the user authentication processing result (step S2410).

Then, when the terminal apparatus transmits a use request to the service 200 in response to an operation by the subscriber (step S2411). Then, in response to the use request received from the terminal apparatus, the service 200 determines whether the service 200 can be used by the terminal apparatus based on the user ID included in the use request, and if the service 200 determines that the service 200 can be used by the terminal apparatus, the service 200 provides the service 200 to the terminal apparatus (step S2412).

Then, the subscriber can use the service 200 from the terminal apparatus (step S2413).

For example, the service 200 may inquire to the management server 300 to determine whether the subscriber can use the service 200. Further, the service 200 may retain synchronization information synchronized with the contract information DB 321, and may determine whether the subscriber can use the service 200 based on the retained synchronization information.

Further, FIG. 25 illustrates a case that the service 200 determines that "the subscriber can use the service 200." On the other hand, if the service 200 determines that "the subscriber cannot use the service 200," the service 200 notifies the terminal apparatus that the subscriber cannot use the service 200 without providing the service 200 to the terminal apparatus.

Further, the user authentication processing may be performed by the service 200 when the subscriber is to use the service 200 from the terminal apparatus. In this case, the service 200 may retain the synchronization information synchronized with the user information DB 324, and may perform the user authentication processing based on the retained synchronization information.

As to the above described embodiment, the management server 300 includes, for example, the coordination service identification unit 333, and the service notification unit 334. When one service 200 (first service) can be used by a user, based on the definition information defining the coordination relationship settable between a plurality of services 200, the coordination service identification unit 333 identifies other service 200 (second service) that can be coordinated with the one service 200 (first service). When the coordination service identification unit 333 identifies the other service 200 (second service), the service notification unit 334 notifies the service 200 serving as the coordination origin, among the one service 200 (first service) and other service 200 (second service), to enable the coordination function of the one service 200 (first service) and other service 200 (second service).

With this configuration, the management server 300 enables the coordination function of the one service 200 (first service) and other service 200 (second service) only when both of the two services 200, which can be coordinated mutually, can be used. That is, if any one of the two services 200, which can be coordinated mutually, cannot be used, the coordination function of both of services 200 is disenabled. With this configuration, as to the management server 300, when one of the two services 200 that can be coordinated mutually can be used by a user and the other of the two services 200 cannot be used by the user, a situation of presenting as if the coordination function of the other service 200 can be used can be prevented because the other service 200 cannot be used by the user actually.

Further, as to the management server 300, if the other service 200 (second service) identified by the coordination service identification unit 333 is the service 200 serving as the coordination origin, the service notification unit 334 notifies the other service 200 (second service) to enable the coordination function with one service 200 (first service) provided for the other service 200 (second service).

With this configuration, as to the two services 200, which can be coordinated mutually, the management server 300 enables the coordination function of both of the two services 200 when one service 200 (first service) is being used already and then the other service 200 (second service) can be set available for use.

Further, as to the management server 300, if the other service 200 (second service) identified by the coordination service identification unit 333 is the service 200 serving as the coordination origin, the service notification unit 334 notifies the other service 200 (second service) to enable the GUI of the coordination function with one service 200 (first service) provided for the other service 200 (second service).

With this configuration, the management server 300 can present the enablement or dis-enablement of coordination function of the two services 200, which can be coordinated mutually, to the user as visual information.

Further, the management server 300 further includes the user notification unit 335. If the other service 200 (second service) identified by the coordination service identification unit 333 is the service 200 serving as the coordination origin, the user notification unit 335 notifies a user that one service 200 (first service) can be used from the other service 200 (second service) in the coordinated manner.

With this configuration, the management server 300 can notify the user more clearly that the coordination function of the two services 200, which can be coordinated mutually, is enabled.

Further, when the management server 300 is used to subscribe a contract of one service 200 (first service) and the other service 200 (second service) by a user, the one service 200 (first service) and the other service 200 (second service) can be used by the user.

With this configuration, when the two services 200 can be used by the user by subscribing or making the contract, the management server 300 enables the coordination function of the two services 200, which can be mutually coordinated.

Further, as to the management server 300, when the user is unable to use one service 200 (first service), the coordination service identification unit 333 identifies the other service 200 (second service) that can be coordinated with the one service 200 (first service) based on the definition information, and then the service notification unit 334 notifies the other service 200 (second service) to disenable the coordination function with the one service 200 (first service) provided for the other service 200 (second service).

With this configuration, when any one of the two services 200 cannot be used by the user, the management server 300 disenables the coordination function of the two services 200 coordinated mutually.

Further, the management server 300 includes the user confirmation unit 336. When one service 200 (first service) cannot be used by the user, and then the coordination function with the one service 200 (first service) provided for the other service 200 (second service) is to be disenabled, the user confirmation unit 336 requests the user to check whether the one service 200 (first service) is to be actually disenabled (whether the user agrees that the one service 200 (first service) cannot be used).

With this configuration, if the coordination function of the two services 200, coordinated mutually, is to be disenabled when one of the two services 200 cannot be used, the management server 300 can request the user to confirm the disenabling of the coordination function of the two services 200 before actually disenabling of the coordination function of the two services 200.

In conventional technologies, services available for use by subscribing contracts can be presented to users. However, coordination of services may not be controlled appropriately for each one of the users. For example, if two services that can be mutually coordinated with each other are providable, and one user may subscribe a contract of using only one service and another user may subscribe a contract of using both services, the coordination of services may not be controlled appropriately for different users subscribing different contracts.

As to the above described embodiment, when the number of services that is available for use for users is changed, such as increased or decreased, in response to subscribing contract or cancelling contract, the coordination of services reflecting the service contracts can be controlled.

Numerous additional modifications and variations are possible in light of the above teachings. It is therefore to be understood that, within the scope of the appended claims, the disclosure of this specification can be practiced otherwise than as specifically described herein. Any one of the above-described operations may be performed in various other ways, for example, in an order different from the one described above.

The apparatuses and devices described in the embodiment merely shows one example of multiple computing environment that can implement the embodiment of this disclosure. In one embodiment, the management server 300 may include a plurality of computing devices as a server cluster. The plurality of computing devices are configured to communicate with each other via any type of communication link, including network or shared memory, and perform the processing disclosed in this description.

Further, the "information processing apparatus" is not limited to the server. The "information processing apparatus" can be any apparatus equipped with each function of the embodiment described above. The information processing apparatus may be, for example, an output device such as projector (PJ), interactive white board (IWB) having interactive communication function, digital signage, head-up display (HUD) device, industrial machinery, imaging device, sound collecting device, medical device, networked home appliance, automobile (e.g., connected car), notebook personal computer (PC), mobile phone, smartphone, tablet terminal, game console, personal digital assistant (PDA), digital camera, wearable personal computer (PC), and desktop PC.

Further, in the above embodiment, the "information processing system" is configured using cloud system, but is not limited thereto. The "information processing system" may be configured using other system configured on the communication network. For example, the "information processing system" may be configured using on-premise system.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside the apparatus as long as the HDD is accessible. In this example, the CPU, such as a cashe memory of the CPU, and the RAM may function as a physical memory or a primary memory of the apparatus, while the HDD may function as a secondary memory of the apparatus.

## Claims

1. An information processing apparatus (300) comprising:
a coordination service identification unit (333) configured to, responsive to a first service (200) that can be used by a user being enabled, identify a second service that is able to be coordinated with the first service based on definition information defining coordination relationships settable between a plurality of services; and **characterized by**
a service notification unit (334) configured to, responsive to the coordination service identification unit (333) identifying the second service, notify to the first or second service serving as a coordinating service information on, respectively, the second or first service serving as a coordinated service.

2. The information processing apparatus (300) according to claim 1,
wherein when the second service identified by the coordination service identification unit (333) is the coordinating service, the service notification unit (334) notifies the second service to enable a coordination function with the first service provided for the second service.

3. The information processing apparatus (300) according to claim 2,
wherein when the second service identified by the coordination service identification unit (333) is the coordinating service, the service notification unit (334) notifies the second service to enable a graphical user interface (GUI) of a coordination function with the first service provided for the second service.

4. The information processing apparatus (300) according to claim 2 or claim 3, further comprising a user notification unit (335),
wherein when the second service identified by the coordination service identification unit (333) is the coordinating service, the user notification unit (335) notifies the user or a person related to the user that the first service can be used from the second service in a coordinated manner.

5. The information processing apparatus (300) according to any one of claims 1 to 4,
wherein the first service and the second service are available for use by the user after the user subscribes a contract.

6. The information processing apparatus (300) according to any one of claims 1 to 5,
wherein when the user is made unable to use the first service, the coordination service identification unit (333) identifies the second service that can be coordinated with the first service based on the definition information, and then the service notification unit (334) notifies the second service to disenable the coordination function with the first service provided for the second service.

7. The information processing apparatus (300) according to claim 6, further comprising a user confirmation unit (336),
wherein when the coordination function with the first service provided for the second service is disenabled as the user is made unable to use the first service, the user confirmation unit (336) requests the user or the person related to the user to confirm whether the first service is to be actually disenabled.

8. The information processing apparatus (300) according to claim 7,
wherein when the user confirmation unit (336) determines that the user is actually using the coordination function based on coordinated use information indicating whether the user is actually using the coordination function, the user confirmation unit (336) requests the user or the person related to the user to confirm whether the first service is to be actually disenabled,
wherein when the user confirmation unit (336) determines that the user is not actually using the coordination function, the user confirmation unit (336) does not request the user to confirm whether the first service is to be actually disenabled.

9. An information processing system (10) comprising:
a terminal apparatus (34, 35, 100, 900);
a plurality of services (200) that can be used from the terminal apparatus (34, 35, 100, 900); and
the information processing apparatus (300) of any one of claims 1 to 8.

10. A method of processing information comprising:
identifying, responsive to a first service (200) that can be used by a user being enabled, a second service that is able to be coordinated with the first service based on definition information defining coordination relationship settable between a plurality of services; and **characterized by**
responsive to the identification of the second service, notifying to the first or second service serving as a coordinating service information on, respectively, the second or first service serving as a coordinated service.

11. A carrier means storing a computer-readable code for causing a computer system execute the method of claim 10.

## Patentansprüche

1. Informationsverarbeitungsvorrichtung (300), umfassend:
eine Koordinierungsdienst-Identifizierungseinheit (333), die so konfiguriert ist, dass sie als Reaktion auf die Aktivierung eines ersten Diensts (200), der von einem Benutzer genutzt werden kann, einen zweiten Dienst identifiziert, der mit dem ersten Dienst koordiniert werden kann, basierend auf Definitionsinformationen, die Koordinierungsbeziehungen definieren, die zwischen einer Vielzahl von Diensten einstellbar sind; und **gekennzeichnet durch**
eine Dienstmeldeeinheit (334), die so konfiguriert ist, dass sie als Reaktion auf die Identifizierung des zweiten Diensts durch die Koordinierungsdienst-Identifizierungseinheit (333), dem ersten oder zweiten Dienst, der als Koordinierungsdienst dient, Informationen über den zweiten bzw. ersten Dienst, der als koordinierter Dienst dient, mitteilt.

2. Informationsverarbeitungsvorrichtung (300) nach Anspruch 1,
wobei die Dienstmeldeeinheit (334) den zweiten Dienst anweist, wenn der von der Koordinierungsdienst-Identifizierungseinheit (333) identifizierte zweite Dienst der koordinierende Dienst ist, eine Koordinierungsfunktion mit dem ersten Dienst zu aktivieren, der für den zweiten Dienst bereitgestellt wird.

3. Informationsverarbeitungsvorrichtung (300) nach Anspruch 2,
wobei die Dienstmeldeeinheit (334) den zweiten Dienst anweist, wenn der von der Koordinierungsdienst-Identifizierungseinheit (333) identifizierte zweite Dienst der Koordinierungsdienst ist, eine grafische Benutzerschnittstelle (GUI) einer Koordinierungsfunktion mit dem für den zweiten Dienst bereitgestellten ersten Dienst zu aktivieren.

4. Informationsverarbeitungsvorrichtung (300) nach Anspruch 2 oder Anspruch 3, ferner umfassend eine Benutzermeldeeinheit (335),
wobei die Benutzermeldeeinheit (335), wenn der von der Koordinierungsdienst-Identifizierungseinheit (333) identifizierte zweite Dienst der Koordinierungsdienst ist, den Benutzer oder eine mit dem Benutzer verbundene Person darüber informiert, dass der erste Dienst vom zweiten Dienst aus koordiniert genutzt werden kann.

5. Informationsverarbeitungsvorrichtung (300) nach einem der Ansprüche 1 bis 4,
wobei der erste Dienst und der zweite Dienst für die Nutzung durch den Benutzer verfügbar sind, nachdem der Benutzer einen Vertrag abgeschlossen hat.

6. Informationsverarbeitungsvorrichtung (300) nach einem der Ansprüche 1 bis 5.
wobei, wenn der Benutzer nicht in der Lage ist, den ersten Dienst zu nutzen, die Koordinierungsdienst-Identifizierungseinheit (333) den zweiten Dienst identifiziert, der mit dem ersten Dienst koordiniert werden kann, basierend auf den Definitionsinformationen, und dann die Dienstmeldeeinheit (334) den zweiten Dienst anweist, die Koordinierungsfunktion mit dem ersten Dienst, der für den zweiten Dienst bereitgestellt wird, zu deaktivieren.

7. Informationsverarbeitungsvorrichtung (300) nach Anspruch 6, ferner umfassend eine Benutzerbestätigungseinheit (336),
wobei, wenn die Koordinierungsfunktion mit dem ersten Dienst, der für den zweiten Dienst bereitgestellt wird, deaktiviert wird, da der Benutzer nicht in der Lage ist, den ersten Dienst zu nutzen, die Benutzerbestätigungseinheit (336) den Benutzer oder die mit dem Benutzer verbundene Person auffordert, zu bestätigen, ob der erste Dienst tatsächlich deaktiviert werden soll.

8. Informationsverarbeitungsvorrichtung (300) nach Anspruch 7,
wobei, wenn die Benutzerbestätigungseinheit (336) feststellt, dass der Benutzer die Koordinierungsfunktion basierend auf Koordinierungsnutzungsinformationen, die angeben, ob der Benutzer die Koordinierungsfunktion tatsächlich nutzt, tatsächlich nutzt, die Benutzerbestätigungseinheit (336) den Benutzer oder die mit dem Benutzer verbundene Person auffordert zu bestätigen, ob der erste Dienst tatsächlich deaktiviert werden soll,
wobei, wenn die Benutzerbestätigungseinheit (336) feststellt, dass der Benutzer die Koordinierungsfunktion tatsächlich nicht nutzt, die Benutzerbestätigungseinheit (336) den Benutzer nicht auffordert zu bestätigen, ob der erste Dienst tatsächlich deaktiviert werden soll.

9. Informationsverarbeitungssystem (10), umfassend:
eine Endgerätvorrichtung (34, 35, 100, 900);
eine Vielzahl von Diensten (200), die von der Endgerätvorrichtung (34, 35, 100, 900) genutzt werden können; und
die Informationsverarbeitungsvorrichtung (300) nach einem der Ansprüche 1 bis 8.

10. Verfahren zum Verarbeiten von Informationen, Folgendes umfassend:
Identifizieren eines zweiten Dienst, der mit dem ersten Dienst koordiniert werden kann, basierend auf Definitionsinformationen, die eine Koordinierungsbeziehung definieren, die zwischen einer Vielzahl von Diensten einstellbar ist, als Reaktion auf die Aktivierung eines ersten Diensts (200), der von einem Benutzer genutzt werden kann; und **gekennzeichnet durch**
Mitteilen an den ersten oder zweiten Dienst, der als koordinierender Dienst dient, von Informationen über den zweiten bzw. ersten Dienst, der als koordinierter Dienst dient, als Reaktion auf die Identifizierung des zweiten Dienst.

11. Trägermedium, das einen computerlesbaren Code speichert, um ein Computersystem zu veranlassen, das Verfahren nach Anspruch 10 auszuführen.

## Revendications

1. Appareil de traitement d'informations (300) comprenant :
une unité d'identification de service de coordination (333) configurée pour, en réponse à l'activation d'un premier service (200) pouvant être utilisé par un utilisateur, identifier un deuxième service pouvant être coordonné avec le premier service sur la base d'informations de définition définissant des relations de coordination paramétrables entre une pluralité de services ; et **caractérisé par**
une unité de notification de service (334) configurée pour, en réponse à l'unité d'identification de service de coordination (333) identifiant le deuxième service, informer le premier ou le deuxième service faisant office de service de coordination que, respectivement, le deuxième ou le premier service fait office de service coordonné.

2. Appareil de traitement d'informations (300) selon la revendication 1,
dans lequel, lorsque le deuxième service identifié par l'unité d'identification de service de coordination (333) est le service de coordination, l'unité de notification de service (334) demande au deuxième service d'activer une fonction de coordination avec le premier service fourni pour le deuxième service.

3. Appareil de traitement d'informations (300) selon la revendication 2,
dans lequel, lorsque le deuxième service identifié par l'unité d'identification de service de coordination (333) est le service de coordination, l'unité de notification de service (334) demande au deuxième service d'activer une interface utilisateur graphique (GUI) d'une fonction de coordination avec le premier service fourni pour le deuxième service.

4. Appareil de traitement d'informations (300) selon la revendication 2 ou la revendication 3, comprenant en outre une unité de notification de l'utilisateur (335),
dans lequel, lorsque le deuxième service identifié par l'unité d'identification de service de coordination (333) est le service de coordination, l'unité de notification de l'utilisateur (335) informe l'utilisateur ou une personne liée à l'utilisateur que le premier service peut être utilisé à partir du deuxième service de manière coordonnée.

5. Appareil de traitement d'informations (300) selon l'une quelconque des revendications 1 à 4,
dans lequel le premier service et le deuxième service sont disponibles à l'utilisation par l'utilisateur après que celui-ci souscrit un contrat.

6. Appareil de traitement d'informations (300) selon l'une quelconque des revendications 1 à 5,
dans lequel, lorsque l'utilisateur se retrouve dans l'incapacité d'utiliser le premier service, l'unité d'identification de service de coordination (333) identifie le deuxième service qui peut être coordonné avec le premier service sur la base des informations de définition, puis l'unité de notification de service (334) demande au deuxième service de désactiver la fonction de coordination avec le premier service fournie pour le deuxième service.

7. Appareil de traitement d'informations (300) selon la revendication 6, comprenant en outre une unité de confirmation de l'utilisateur (336),
dans lequel, lorsque la fonction de coordination avec le premier service fournie pour le deuxième service est désactivée puisque l'utilisateur se retrouve dans l'incapacité d'utiliser le premier service, l'unité de confirmation de l'utilisateur (336) demande à l'utilisateur ou à la personne liée à l'utilisateur de confirmer si le premier service doit être effectivement désactivé.

8. Appareil de traitement d'informations (300) selon la revendication 7,
dans lequel, lorsque l'unité de confirmation de l'utilisateur (336) détermine que l'utilisateur utilise effectivement la fonction de coordination sur la base d'informations d'utilisation coordonnée indiquant si l'utilisateur utilise effectivement la fonction de coordination, l'unité de confirmation de l'utilisateur (336) demande à l'utilisateur ou à la personne liée à l'utilisateur de confirmer si le premier service doit être effectivement désactivé,
dans, lequel lorsque l'unité de confirmation de l'utilisateur (336) détermine que l'utilisateur n'utilise pas effectivement la fonction de coordination, l'unité de confirmation de l'utilisateur (336) ne demande pas à l'utilisateur de confirmer si le premier service doit être effectivement désactivé.

9. Système de traitement d'informations (10) comprenant :
un appareil terminal (34, 35, 100, 900) ;
une pluralité de services (200) pouvant être utilisés à partir de l'appareil terminal (34, 35, 100, 900) ; et
l'appareil de traitement d'informations (300) selon l'une quelconque des revendications 1 à 8.

10. Procédé de traitement d'informations comprenant :
l'identification, en réponse à l'activation d'un premier service (200) pouvant être utilisé par un utilisateur, d'un deuxième service pouvant être coordonné avec le premier service sur la base d'informations de définition définissant une relation de coordination paramétrable entre une pluralité de services ; et **caractérisé par**
en réponse à l'identification du deuxième service, le fait d'informer le premier ou le deuxième service faisant office de service de coordination du fait que, respectivement, le deuxième ou le premier service fait office de service coordonné.

11. Moyen de support stockant un code lisible par ordinateur pour amener un système informatique à exécuter le procédé selon la revendication 10.
